(19) Europäisches Patentamt
European Patent Office
Office européen des brevets

(11) **EP 4 294 088 B1**

(12) **EUROPEAN PATENT SPECIFICATION**

(45) Date of publication and mention
of the grant of the patent:
**21.01.2026 Bulletin 2026/04**

(21) Application number: **21930730.3**

(22) Date of filing: **16.03.2021**

(51) International Patent Classification (IPC):
*H04W 52/02* (2009.01)    *H04W 68/00* (2009.01)
*H04W 76/28* (2018.01)

(52) Cooperative Patent Classification (CPC):
**H04W 52/0229; H04W 68/005; H04W 76/28;**
H04W 52/0216

(86) International application number:
**PCT/CN2021/081098**

(87) International publication number:
**WO 2022/193134 (22.09.2022 Gazette 2022/38)**

(54) **PAGING MONITORING METHODS AND APPARATUSES**

FUNKRUFÜBERWACHUNGSVERFAHREN UND VORRICHTUNGEN

PROCÉDÉS ET APPAREILS DE SURVEILLANCE DE RADIOMESSAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**20.12.2023 Bulletin 2023/51**

(60) Divisional application:
**25219575.5 / 4 683 425**

(73) Proprietor: **GUANGDONG OPPO MOBILE
TELECOMMUNICATIONS
CORP., LTD.
Dongguan, Guangdong 523860 (CN)**

(72) Inventors:
• **LI, Haitao
  Dongguan, Guangdong 523860 (CN)**
• **HU, Yi
  Dongguan, Guangdong 523860 (CN)**

(74) Representative: **Taor, Simon Edward William
Venner Shipley LLP
200 Aldersgate
London EC1A 4HD (GB)**

(56) References cited:
**WO-A1-2020/118726**

• XIAOMI COMMUNICATIONS: "Discussion on e-DRX for Redcap Devices", vol. RAN WG2, no. electronic; 20210125 - 20210205, 15 January 2021 (2021-01-15), XP051973532, Retrieved from the Internet <URL:https://ftp.3gpp.org/tsg_ran/WG2_RL2/TSGR2_113-e/Docs/R2-2100344.zip R2-2100344 Discussion on e-DRX for Redcap Devices.doc> [retrieved on 20210115]
• CATT: "On eDRX for NR RRC Inactive and Idle", vol. RAN WG2, no. electronic; 20201102 - 20201113, 23 October 2020 (2020-10-23), XP052362417, Retrieved from the Internet <URL:https://ftp.3gpp.org/tsg_ran/WG2_RL2/TSGR2_112-e/Docs/R2-2009363.zip R2-2009363 On eDRX for NR RRC Inactive and Idle.doc> [retrieved on 20201023]
• XIAOMI COMMUNICATIONS: "Discussion on e-DRX for Redcap Devices", 3GPP DRAFT; R2-2100344, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210125 - 20210205, 15 January 2021 (2021-01-15), Mobile Competence Centre ; 650, route des Lucioles ; F-06921 Sophia-Antipolis Cedex ; France , XP051973532

- "3rd Generation Partnership Project; Technical Specification Group Services and System Aspects; Study on Cellular IoT support and evolution for the 5G System (Release 16)", 3GPP STANDARD; TECHNICAL REPORT; 3GPP TR 23.724, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.5.0, 17 July 2018 (2018-07-17), Mobile Competence Centre ; 650, route des Lucioles ; F-06921 Sophia-Antipolis Cedex ; France , pages 1 - 218, XP051475004

- QUALCOMM INCORPORATED: "PTW for eDRX in RRC-Inactive", 3GPP DRAFT; S2-1900175-23501-EDRX PTW RRC INACTIVE-R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kochi, India; 20190121 - 20190125, 15 January 2019 (2019-01-15), Mobile Competence Centre ; 650, route des Lucioles ; F-06921 Sophia-Antipolis Cedex ; France , XP051589864

## Description

### TECHNICAL FIELD

The embodiments of the present disclosure relate to the field of communication technologies, and in particular, to paging monitoring methods, a terminal device and a network device.

### BACKGROUND

In current standard discussion, introduction of extended Discontinuous Reception (eDRX) mechanism is considered for power saving requirements of reduced capability (RedCap) terminals. For an RRC_IDLE state, it has been decided to support an eDRX cycle longer than 10.24s, and to use a Hyper System Frame Number (H-SFN) and Paging Time Window (PTW) scheme. For an RRC_INACTIVE state, in consideration of the gain in energy saving, it is very likely to introduce an eDRX cycle of more than 10.24s.

A terminal device in the RRC_INACTIVE state needs to monitor a Core Network (CN) paging message initiated by a CN side (CN paging) and a Radio Access Network (RAN) paging message initiated by a RAN side (RAN paging) simultaneously. When both the CN paging and the RAN paging introduce the eDRX mechanism, how the terminal device performs paging monitoring is a problem that needs to be solved. Related technologies are known from "Discussion on e-DRX for Redcap Devices", 3GPP DRAFT, R2-2100344; and "On eDRX for NR RRC Inactive and Idle", 3GPP DRAFT, R2-2009363.

### SUMMARY

Embodiments of the present disclosure provide a paging monitoring method and apparatus, a device and a storage medium. The technical solutions are as follows.

According to an aspect of an embodiment of the present disclosure, a paging monitoring method is provided as set out in claim 1. Additional features are set out in claims 2 to 4.

According to an aspect of an embodiment of the present disclosure, a paging monitoring method is provided as set out in claim 5. Additional features are set out in claims 6 to 10.

According to an aspect of an embodiment of the present disclosure, a terminal device is provided as set out in claim 11.

According to an aspect of an embodiment of the present disclosure, a network device is provided as set out in claim 12.

According to an aspect of an embodiment of the present disclosure, not being claimed, a computer-readable storage medium is provided, the storage medium has a computer program stored thereon, and the computer program is used for execution by a processor, so as to implement the above paging monitoring method on the terminal device side, or implement the above paging monitoring method on the network device side.

According to an aspect of an embodiment of the present disclosure, not being claimed, a chip is provided, the chip includes a programmable logic circuit and/or program instructions, and the chip, when running, is configured to implement the above paging monitoring method on the terminal device side, or the above paging monitoring method on the network device side.

According to an aspect of the embodiments of the present disclosure, not being claimed, a computer program product or computer program is provided, the computer program product or computer program includes computer instructions, the computer instructions are stored in a computer-readable storage medium, and a processor reads from the computer-readable storage medium and executes the computer instructions, so as to implement the above paging monitoring method on the terminal device side, or the above paging monitoring method on the network device side.

The technical solutions provided in the embodiments of the present disclosure can achieve the following beneficial effects.

The network device sends eDRX-related indication information to the terminal device in the serving cell, and indicates to the terminal device, through the indication information, whether the serving cell supports CN eDRX and/or RAN eDRX, so that the terminal device can perform paging monitoring according to the indication information, so as to perform paging monitoring at suitable occasions, achieving the purpose of saving power and not missing paging messages.

### BRIEF DESCRIPTION OF THE DRAWINGS

In order to clearly describe the technical solutions in the embodiments of the present disclosure, the accompanying drawings which are referred to in the description of the embodiments will be briefly described below. Obviously, the drawings in the following description show merely some embodiments of the present disclosure, and a person of ordinary skill in the art may still derive other drawings from these accompanying drawings without creative efforts.

FIG. 1 is a schematic diagram of a network architecture provided by an embodiment of the present disclosure;

FIG. 2 is a flowchart of a paging monitoring method provided by an embodiment of the present disclosure;

FIG. 3 is a flowchart of a paging monitoring method provided by another embodiment of the present disclosure;

FIG. 4 is a schematic diagram of a paging cycle in several situations involved in the embodiment of FIG. 3;

FIG. 5 is a flowchart of a paging monitoring method provided by another embodiment of the present disclosure;

FIG. 6 is a schematic diagram of a paging cycle in several situations involved in the embodiment of FIG. 5;

FIG. 7 is a flow chart of transmitting eDRX configuration parameters between network devices provided by an embodiment of the present disclosure;

FIG. 8 is a block diagram of a paging monitoring apparatus provided by an embodiment of the present disclosure;

FIG. 9 is a block diagram of a paging monitoring apparatus provided by another embodiment of the present disclosure;

FIG. 10 is a schematic structural diagram of a terminal device provided by an embodiment of the present disclosure; and

FIG. 11 is a schematic structural diagram of a network device provided by an embodiment of the present disclosure.

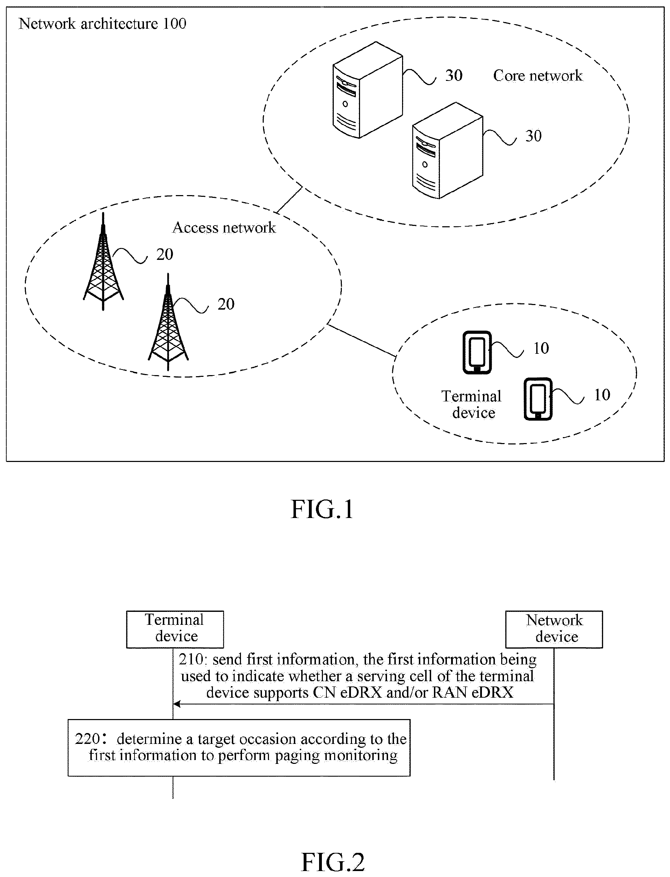

The subject-matter of figures 1, 2, 4-11 and their descriptions, even if described or named as "embodiment(s)", "invention(s)", "aspect(s)", "example(s)" or "disclosure(s)" etc., does not fully and thus only partly correspond to the invention as defined in the claims, since one or more features present in and required by the independent claims are missing in the "embodiment(s)", "invention(s)", "aspect(s)", "example(s)" or "disclosure(s)" etc. The subject-matter of figures 1, 2, 4-11 and their descriptions is therefore not covered by the claims and is useful to highlight specific aspects of the claims.

## DETAILED DESCRIPTION

In order to make the objectives, technical solutions, and advantages of the present disclosure more clear, the implementations of the present disclosure will be further described in detail below in conjunction with the accompanying drawings.

The network architecture and service scenarios described in the embodiments of the present disclosure are intended to more clearly illustrate the technical solutions of the embodiments of the present disclosure, and do not constitute a limitation on the technical solutions provided by the embodiments of the present disclosure. Those of ordinary skill in the art will understand that with evolution of the network architecture and emergence of new service scenarios, the technical solutions provided in the embodiments of the present disclosure are equally applicable to similar technical problems.

Refer to FIG. 1, which shows a schematic diagram of a network architecture 100 provided by an embodiment of the present disclosure. The network architecture 100 may include a terminal device 10, an access network device 20 and a core network device 30.

The terminal device 10 may refer to User Equipment (UE), an access terminal, a user unit, a user station, a mobile station, a mobile platform, a remote station, a remote terminal, a mobile device, a wireless communication device, a user agent, or a user device. Optionally, the terminal device 10 may also be a cellular phone, a cordless phone, a Session Initiation Protocol (SIP) phone, a Wireless Local Loop (WLL) station, a Personal Digital Assistant (PDA), a handheld device with wireless communication functions, a computing device or other processing devices connected to a wireless modem, a vehicle-mounted device, a wearable device, a terminal device in a 5th Generation System (5GS), a terminal device in future evolution of a Public Land Mobile Network (PLMN), etc., which are not limited in the embodiments of the present disclosure. For convenience of description, the devices mentioned above are collectively referred to as terminal devices. The number of the terminal devices 10 is generally multiple, and one or more terminal devices 10 may be distributed in a cell managed by each access network device 20.

The access network device 20 is a device deployed in an access network to provide a wireless communication function for the terminal device 10. The access network device 20 may include various forms of macro base stations, micro base stations, relay stations, access points, and so on. In systems adopting different radio access technologies, the name of the device with access network device functions may be different. For example, in a 5G NR system, it is called gNodeB or gNB. The name "access network device" may change with the evolution of communication technologies. For convenience of description, in the embodiments of the present disclosure, the above-mentioned devices that provide the wireless communication function for the terminal device 10 are collectively referred to as access network devices. Optionally, a communication relationship may be established between the terminal device 10 and the core network device 30 through the access network device 20. Exemplarily, in a Long Term Evolution (LTE) system, the access network device 20 may be an Evolved Universal Terrestrial Radio Access Network (EUTRAN) or one or more eNodeBs in the EUTRAN. In a 5G NR system, the access network device 20 may be a Radio Access Network (RAN) or one or more gNBs in the RAN. In the embodiments of the present disclosure, the network device refers to the access network device 20, such as a base station, unless otherwise indicated.

The core network device 30 is a device deployed in a core network. The functions of the core network device 30 are mainly to provide user connections, manage users, carry services, and function as a bearer network to provide an interface to external networks. For example, the core network device in the 5G NR system may include devices such as an Access and Mobility Management Function (AMF) entity, a User Plane Function (UPF) entity, and a Session Management Function (SMF) entity.

In an example, the access network device 20 and the core network device 30 communicate with each other through a certain air interface technology, such as an NG interface in the 5G NR system. The access network device 20 and the terminal device 10 communicate with each other through a certain air interface technology, such as a Uu interface.

The "5G NR system" in the embodiments of the present disclosure may also be called a 5G system or an NR system, and those skilled in the art can understand its meaning. The technical solutions described in the embodiments of the present disclosure can be applied to LTE systems, 5G NR systems, and subsequent evolution systems of 5G NR systems, and can also be applied to other communication systems such as NB-IoT (Narrow Band Internet of Things, narrowband Internet of Things) systems, which are not limited in the present disclosure.

Before introducing the technical solutions of the present disclosure, some background knowledge involved in the present disclosure will be introduced first.

The main application scenarios of the 5G NR system include Enhanced Mobile Broadband (eMBB), Ultra Reliable Low Latency Communication (URLLC), and Massive Machine Type Communication (mMTC).

The eMBB is still targeting at obtaining multimedia content, services and data by the users, and the demand therefor is growing very rapidly. On the other hand, since eMBB may be deployed in different scenarios, such as indoors, urban areas, rural areas, etc., the capabilities and requirements thereof are also quite different, they cannot be generalized and must be analyzed in detail in conjunction with specific deployment scenarios. Typical applications of URLLC include industrial automation, power automation, telemedicine operations (surgeries), traffic safety, etc. Typical features of mMTC include high connection density, small data volume, delay-insensitive services, low cost and long service life of the module, etc.

In the 5G NR network environment, in order to reduce air interface signaling overhead and quickly restore wireless connections and data services, a new Radio Resource Control (RRC) state is defined, i.e., a RRC_INACTIVE state (also known as RRC inactive state). This state is different from the RRC_IDLE state (also known as RRC idle state) and RRC_ACTIVE state (also known as RRC connected state).

RRC_IDLE state: Mobility is based on cell selection and reselection of UE, paging is initiated by a Core Network (CN), and the paging area is configured by the CN. There is no UE Access Stratum (AS) context on the base station side. And, there is no RRC connection.

RRC_CONNECTED state: there is RRC connection, and there is UE AS context in the base station and the UE. The network side is aware of the location of the UE in a specific cell level. Mobility is the mobility controlled by the network side. Unicast data can be transmitted between the UE and the base station.

RRC_INACTIVE state: mobility is based on cell selection and reselection of the UE, there is a connection between CN and NR, there is UE AS context on a certain base station, the paging is triggered by RAN, RAN-based paging area is managed by RAN, and the network side is aware of the location of the UE in a level of the RAN-based paging area.

Next, the paging mechanism is explained.

The main function of paging is to enable the network device to page the terminal device through a paging message when the terminal device is in the RRC_IDLE or RRC_INACTIVE state, or to notify the terminal device of system message change or earthquake tsunami/public warning information through a short message (applicable to all RRC states of the terminal device, including the RRC_ACTIVE state).

The paging includes a Physical Downlink Control Channel (PDCCH) scrambled by a Paging Radio Network Temporary Identifier (P-RNTI), and a Physical Downlink Share Channel (PDSCH) scheduled by the PDCCH. The Paging message is transmitted in the PDSCH, and the short message is 8 bits in the PDCCH.

For a terminal device in the RRC_IDLE state or RRC_INACTIVE state, since there is no other data communication between the terminal device and the network device, in order to save power for the terminal, the terminal device can discontinuously monitor the paging channel, that is, adopting the paging DRX mechanism. Under the paging DRX mechanism, the terminal device only needs to perform paging monitoring during one Paging Occasion (PO) in each DRX cycle. PO is a series of PDCCH monitoring occasions, and it can be composed of multiple slots. In addition, there is concept of a Paging Frame (PF), and PF refers to a wireless frame (of fixed 10ms), which can contain multiple POs or starting positions of multiple POs.

The paging DRX cycle is determined jointly by a default DRX cycle in system broadcast and a UE specific DRX cycle configured in high-layer signaling (Non-access stratum (NAS) signaling), and the terminal device takes the minimum of the two as the paging DRX cycle. From the perspective of the network, there can be multiple POs in one Paging DRX cycle, and the position where the terminal device monitors the PO is related to an Identifier (ID) of the terminal device. Specifically, PF and PO of a terminal device in a Paging DRX are determined as follows (TS 38.304):

The SFN (System Frame Number) number of the PF is determined by the following formula:

$$(\text{SFN}+\text{PF\_offset}) \bmod T = (T \text{ div } N)*(\text{UE\_ID} \bmod N).$$

An index (i_s) of a PO in a PF is determined by the following formula:

$$i\_s = \text{floor } (\text{UE\_ID}/N) \bmod Ns.$$

Some parameters in the above formulas are explained below.

T: a DRX cycle for the terminal device to receive paging. The network device will broadcast a default DRX cycle. If the RRC/high layer configures a UE specific DRX cycle for the terminal device, the minimum of the DRX cycle broadcast by the network device and the UE specific DRX cycle configured by RRC/high layer is used as the DRX cycle of the terminal device. If the RRC/high layer does not configure the UE specific DRX cycle for the terminal device, the DRX cycle broadcast by the network device is used as the DRX cycle of the terminal device.

N: the number of PFs included in one DRX cycle.

Ns: the number of POs included in one PF.

PF_offset: a time-domain offset used to determine the PF.

UE_ID: ID of the terminal device, such as 5G-S-TMSI mod 1024.

For a terminal device, according to the above formulas, the position of the PF and the index of the PO in a Paging DRX cycle can be known. It is specified in TS 38.304 that PO is composed of multiple PDCCH monitoring occasions, and one PO contains X PDCCH monitoring occasions, X being equal to the number of Synchronization Signal and PBCH blocks (SSBs) broadcast in a Master Information Block (MIB) that are actually sent.

After the terminal device knows the PF, the index of the PO, and the number of PDCCH monitoring occasions in the PO, it only needs to know the starting position of the first PDCCH monitoring occasion of the PO through relevant configuration parameters. The starting position can be configured through high-layer signaling, or can be obtained based on the PO index. The terminal device blindly detects the paging message according to the determined PO.

Next, the eDRX mechanism in the LTE system will be explained.

Considering that in scenarios such as NB-IoT and eMTC, the service types of terminal devices are relatively unitary and the traffic activity is very low, such terminal devices are in the non-connected state most of time, and considering that the services of such terminal device are not sensitive to delay requirements, in order to further save power for such terminal devices in the non-connected state, in LTE it introduces the eDRX mechanism for such terminal devices to support a longer paging cycle, that is, the paging cycle is more than 256 SFNs.

For the terminal device configured with eDRX, if an eDRX cycle of the terminal device is 512, the terminal device calculates its corresponding PO based on T=512. If the eDRX cycle of the terminal device is greater than or equal to 1 Hyper System Frame Number (H-SFN), the terminal device monitors the PDCCH scrambled by the P-RNTI on its own PO in a Paging Time Window (PTW) within one eDRX cycle. The PTW is specific to the terminal device, and is determined according to a paging hyper frame PH (a start time point PTW_start and an end time point PTW_end within the PH).

PH is a H-SFN that meets the following condition:

$$\text{H-SFN} \bmod T_{eDRX,H}= (\text{UE\_ID\_H} \bmod T_{eDRX,H}).$$

UE_ID_H is obtained based on the hashed ID, and $T_{eDRX,H}$ is the eDRX cycle in a unit of a hyper frame, which is configured by Access and Mobility Management Function (AMF).

PTW_start is a starting radio frame number of the PTW, which is an SFN that meets the following conditions:

$$\text{SFN} = 256*\text{ieDRX};$$

$$\text{ieDRX} = \text{floor}(\text{UE\_ID\_H} /T_{eDRX,H}) \bmod 4.$$

PTW_end is an end radio frame number of the PTW, which is a SFN that meets the following condition:

$$SFN = (PTW\_start + L*100 - 1) \bmod 1024;$$

where L is a window length of the PTW, which is configured by AMF.

As explained above, the terminal device in the RRC_INACTIVE state needs to monitor the CN paging (core network paging message) initiated by the CN side and the RAN paging (access network paging message) initiated by the RAN side simultaneously. When both the CN paging and the RAN paging introduce the eDRX mechanism, if the two sets of eDRX configuration parameters (including, for example, a PTW and an eDRX cycle) are different, the terminal device may need to monitor the CN paging and the RAN paging using different eDRX parameters. For the network side, different network devices (such as base stations) may have different supports for the two sets of eDRX mechanisms. Therefore, in such situation, how the terminal device performs paging monitoring is a problem that needs to be solved.

In the technical solutions of the present disclosure, the network device sends eDRX-related indication information to the terminal device in the serving cell, and indicates to the terminal device, through the indication information, whether the serving cell supports CN eDRX and/or RAN eDRX, so that the terminal device can perform paging monitoring according to the indication information, so as to perform paging monitoring at suitable occasions, achieving the purpose of saving power and not missing paging messages.

In the following, the technical solutions of the present disclosure will be described by way of several embodiments.

Please refer to FIG. 2, which shows a flowchart of a paging monitoring method provided by an embodiment of the present disclosure. This method can be applied to the network architecture shown in FIG. 1. The method may include the following steps (210~220).

In step 210, a network device sends first information to a terminal device, where the first information is used to indicate whether a serving cell of the terminal device supports CN eDRX and/or RAN eDRX.

Correspondingly, the terminal device receives the first information from the network device, and the terminal device can perform paging monitoring according to the first information.

In the embodiments of the present disclosure, whether to support a certain type of eDRX can be understood as whether to support the implementation of this type of eDRX in the form of PTW and PH, for example, to support an eDRX cycle greater than 10.24s. For example, whether to support CN eDRX can be understood as whether to support the implementation of CN eDRX in the form of PTW and PH, and whether to support RAN eDRX can be understood as whether to support the implementation of RAN eDRX in the form of PTW and PH.

Optionally, the above first information may be sent in the form of a system message. For example, the network device broadcasts the system message to the terminal devices in the serving cell, and the system message includes the first information.

Optionally, the terminal device is in an inactive state (i.e., RRC_INACTIVE state). In view of that the terminal device needs to monitor the CN paging (a core network paging message) initiated by the CN side and the RAN paging (an access network paging message) initiated by the RAN side simultaneously in the RRC_INACTIVE state, in the present disclosure, the network device (which can be a network device in the serving cell of the terminal device, such as a base station) sends the above first information to the terminal device, so that the terminal device can perform paging monitoring according to the first information, so as to perform paging monitoring at an appropriate occasion, achieving the purpose of saving power and not missing paging messages.

In step 220, the terminal device determines a target occasion to perform paging monitoring according to the first information.

The target occasion refers to a time period during which the terminal device activates the receiving and monitoring function for the paging message, and within this time period, the terminal device has the capability of receiving the paging message. In addition, since the paging message may be a paging message from the CN or a paging message from the RAN, the terminal device can determine the PTW of the CN eDRX and/or determine the PTW of the RAN eDRX and determine the DRX cycle for receiving the paging message, according to the first information, and calculate the target occasion for receiving the paging message through combination of the above information of the two aspects, to perform paging monitoring.

To sum up, in the technical solutions provided by the embodiments of the present disclosure, the network device sends eDRX-related indication information to the terminal device in the serving cell, and indicates to the terminal device through the indication information whether the serving cell supports CN eDRX and/or RAN eDRX, so that the terminal device can perform paging monitoring according to the indication information, so as to perform paging monitoring at suitable occasions, achieving the purpose of saving power and not missing paging messages.

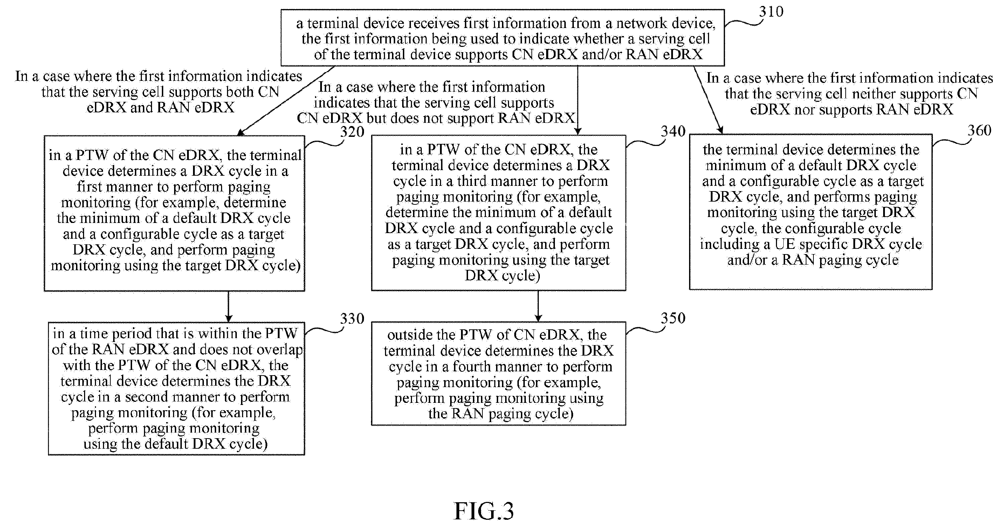

Please refer to FIG. 3, which shows a flowchart of a paging monitoring method provided by an embodiment of the present disclosure. This method can be applied to the network architecture shown in FIG. 1. The method may include the following steps.

In step 310, a terminal device receives first information from a network device, where the first information is used to indicate whether a serving cell of the terminal device supports CN eDRX and/or RAN eDRX.

For introduction of the first information, reference can be made to the foregoing embodiments, and the details are not repeated here.

In this embodiment, CN eDRX and RAN eDRX are respectively configured with corresponding configuration parameters, that is, CN eDRX and RAN eDRX each has a set of configuration parameters, instead of sharing the same set of configuration parameters. Optionally, the above configuration parameters include an eDRX cycle and/or a PTW length. In the case where CN eDRX and RAN eDRX are respectively configured with corresponding configuration parameters, the configuration parameters configured for CN eDRX and the configuration parameters configured for RAN eDRX may be the same or may be different, which is not limited in the present disclosure. For example, the configuration parameters configured for the CN eDRX include the eDRX cycle of T1 and the PTW length of t1, and the configuration parameters configured for the RAN eDRX include the eDRX cycle of T2 and the PTW length of t2; where T1 and T2 may be equal or may be different, t1 and t2 may be equal or may be not equal. In this case, since the two sets of configuration parameters are configured independently, they do not affect each other.

In an example, as shown in FIG. 3, in a case where the first information indicates that the serving cell supports both CN eDRX and RAN eDRX, the terminal device performs paging monitoring in accordance with the two sets of configuration parameters (including an eDRX cycle and/or a PTW length, for example). Optionally, the terminal device may perform the following step 320 and/or step 330.

In step 320, in a PTW of the CN eDRX, the terminal device determines the DRX cycle in a first manner to perform paging monitoring.

In an example, the first manner is as follows: within the PTW of CN eDRX, the terminal device determines the minimum of a default DRX cycle and a configurable cycle as a target DRX cycle, and performs paging monitoring using the target DRX cycle, where the configurable cycle includes a DRX cycle specific to the terminal device (i.e., a UE specific DRX cycle) and/or a RAN paging cycle.

In the embodiments of the present disclosure, the configurable cycle refers to cycle information that can be selectively configured or not configured. For example, if the network device configures the UE specific DRX cycle for the terminal device but does not configure the RAN paging cycle, the terminal device determines the minimum of the default DRX cycle and the UE specific DRX cycle as the target DRX cycle; if the network device configures the RAN paging cycle but does not configure the UE specific DRX cycle for the terminal device, the terminal device determines the minimum of the default DRX cycle and the RAN paging cycle as the target DRX cycle; and if the network device contigures the UE specific DRX cycle and the RAN paging cycle for the terminal device cycle, the terminal device determines the minimum of the default DRX cycle, the UE specific DRX cycle and the RAN paging cycle as the target DRX cycle. In addition, if the network device does not configure the UE specific DRX cycle and the RAN paging cycle for the terminal device, the terminal device can directly use the default DRX cycle to perform paging monitoring.

It should be noted that the expression "the terminal device determines the minimum of the default DRX cycle and the configurable cycle as the target DRX cycle, and performs paging monitoring using the target DRX cycle" that appears below is the same as that explained here, and the details will not be repeated below.

In step 330, in a time period that is within the PTW of the RAN eDRX and does not overlap with the PTW of the CN eDRX, the terminal device determines the DRX cycle in a second manner to perform paging monitoring. The first manner and the second manner are different.

In an example, the second manner is as follows: in the time period that is within the PTW of the RAN eDRX and does not overlap with the PTW of the CN eDRX, the terminal device uses the default DRX cycle to perform paging monitoring.

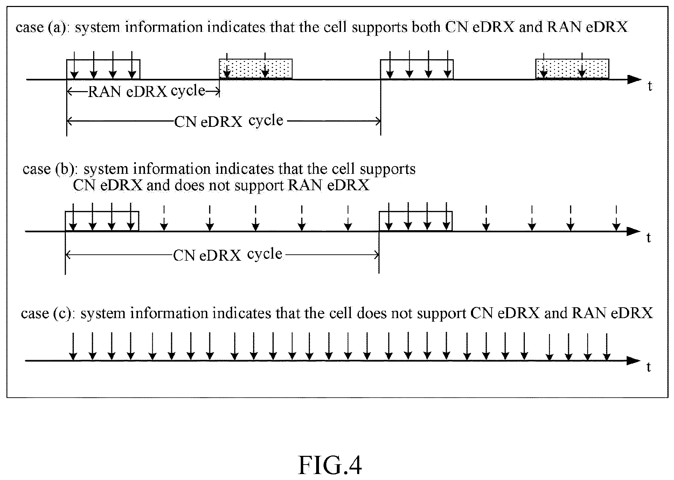

As shown in case (a) in FIG. 4, the white-filled rectangular box represents the PTW of CN eDRX, and the black-filled rectangular box represents the portion that is within the PTW of RAN eDRX and does not overlap with the PTW of CN eDRX. Within the PTW of CN eDRX, the terminal device determines the target DRX cycle according to the above method, and uses the target DRX cycle to perform paging monitoring. For example, the black solid-line arrows in the PTW of CN eDRX in the figure represent the start position of each target DRX cycle. In the portion that is within the PTW of RAN eDRX and does not overlap with the PTW of CN eDRX, the terminal device uses the default DRX cycle to perform paging monitoring, for example, the dotted arrows in the portion that is within the PTW of RAN eDRX and does not overlap with the PTW of CN eDRX in the figure represent the starting position of each default DRX cycle.

As shown in FIG. 3, in a case where the first information indicates that the serving cell supports CN eDRX but does not support RAN eDRX (for example, a NG-eNB base station connected to 5GC in R16), the terminal device performs paging monitoring in accordance with the configuration parameters of CN eDRX (including an eDRX cycle and/or a PTW length, for example). The terminal device performs the following step 340 and/or step 350.

In step 340, in the PTW of the CN eDRX, the terminal device determines the DRX cycle in a third manner to perform paging monitoring.

In an example, the third manner is as follows: within the PTW of CN eDRX, the terminal device determines the minimum of a default DRX cycle and a configurable cycle as a target DRX cycle, and performs paging monitoring using the target DRX cycle; where the configurable cycle includes a UE specific DRX cycle and/or a RAN paging cycle.

In step 350, outside the PTW of CN eDRX, the terminal device determines the DRX cycle in a fourth manner to perform paging monitoring. The third manner is different from the fourth manner.

In an example, the fourth manner is as follows: outside the PTW of CN eDRX, the terminal device uses the RAN paging cycle to perform paging monitoring.

As shown in case (b) in FIG. 4, the white-filled rectangular box represents the PTW of CN eDRX. In the PTW of CN eDRX, the terminal device determines the target DRX cycle according to the above method, and uses the target DRX cycle to perform paging monitoring. For example, the black solid-line arrows in the PTW of CN eDRX in the figure represent the start position of each target DRX cycle. Outside the PTW of CN eDRX, the terminal device uses the default DRX cycle to perform paging monitoring. For example, the dotted arrows outside the PTW of CN eDRX in the figure represent the starting position of each default DRX cycle.

In another example, as shown in FIG. 3, in a case where the first information indicates that the serving cell neither supports CN eDRX nor supports RAN eDRX, the terminal device may perform the following step 360.

In step 360, the terminal device determines the minimum of the default DRX cycle and the configurable cycle as the target DRX cycle, and uses the target DRX cycle to perform paging monitoring; where the configurable cycle includes a UE specific DRX cycle and/or a RAN paging cycle.

As shown in case (c) in FIG. 4, the terminal device determines the target DRX cycle according to the above method, and performs paging monitoring using the target DRX cycle. For example, the black solid-line arrows in the figure represent the starting position of each target DRX cycle.

To sum up, in this embodiment, in the case where CN eDRX and RAN eDRX have independent configuration parameters, after determining the results on supporting of CN eDRX and/or RAN eDRX by the serving cell based on eDRX-related indication information, the terminal device performs paging monitoring using appropriate cycles in different time periods based on the results, so as to save power and not miss paging messages.

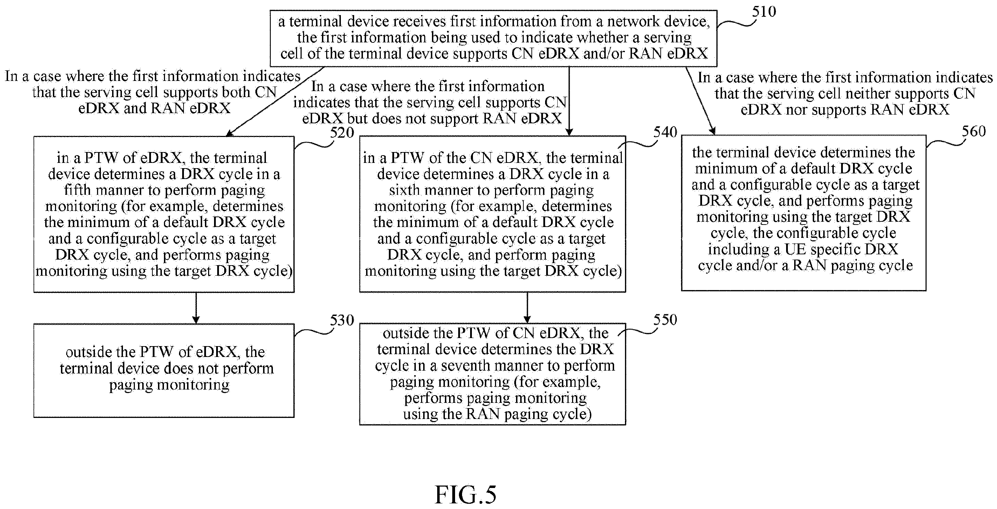

Please refer to FIG. 5, which shows a flowchart of an eDRX processing method provided by another embodiment of the present disclosure. This method can be applied to the network architecture shown in FIG. 1. The method may include the following steps.

In step 510, a terminal device receives first information from a network device, where the first information is used to indicate whether a serving cell of the terminal device supports CN eDRX and/or RAN eDRX.

For introduction of the first information, reference may be made to the foregoing embodiments, and the details are not repeated here.

In this embodiment, CN eDRX and RAN eDRX share the same set of configuration parameters. Optionally, the above configuration parameters include an eDRX cycle and/or a PTW length. For example, the network side firstly configures a set of configuration parameters corresponding to CN eDRX for the terminal device, and the RAN eDRX uses the above configuration parameters corresponding to CN eDRX, so that CN eDRX and RAN eDRX share the same set of configuration parameters. For another example, the network side configures a set of eDRX-related configuration parameters for the terminal device, and the configuration parameters are applicable to both CN eDRX and RAN eDRX, and in this way, it can also be realized that the both share the same set of configuration parameters.

In an example, as shown in FIG. 5, in a case where the first information indicates that the serving cell supports both CN eDRX and RAN eDRX, the terminal device performs paging monitoring in accordance with the eDRX configuration parameters (i.e., the same set of configuration parameters above, including an eDRX cycle and/or a PTW length, for example). Optionally, the terminal device may perform the following step 520 and/or step 530.

In step 520, in a PTW of eDRX, the terminal device determines a DRX cycle in a fifth manner to perform paging monitoring.

In an example, the fifth manner is as follows: within the PTW of eDRX, the terminal device determines the minimum of a default DRX cycle and a configurable cycle as a target DRX cycle, and performs paging monitoring using the target DRX cycle; where the configurable cycle includes a UE specific DRX cycle and/or a RAN paging cycle.

In step 530, outside the PTW of eDRX, the terminal device does not perform paging monitoring.

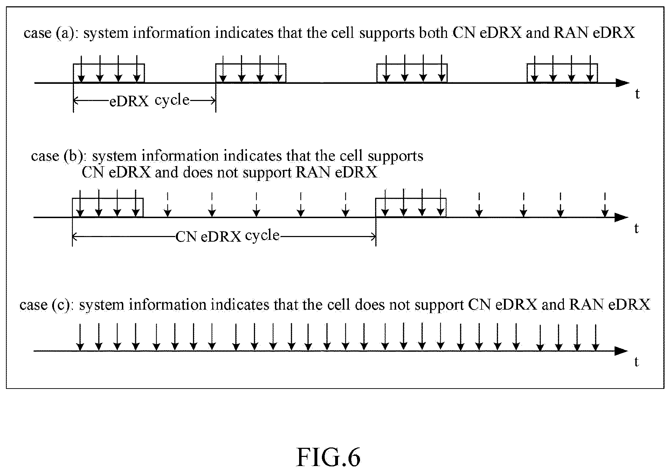

As shown in case (a) in FIG. 6, since CN eDRX and RAN eDRX share the same set of configuration parameters, the eDRX cycles of the two are the same, and the PTW lengths of the two are the same. The white-filled rectangular box represents the PTW of eDRX. In the PTW of eDRX, the terminal device determines the target DRX cycle according to the above method, and uses the target DRX cycle to perform paging monitoring. For example, the black solid-line arrows in the PTW of eDRX in the figure represent the starting position of each target DRX cycle. Outside the PTW of eDRX, the terminal device does not perform paging monitoring.

In another example, as shown in FIG. 5, in a case where the first information indicates that the serving cell supports CN eDRX but does not support RAN eDRX (for example, a NG-eNB base station connected to 5GC in R16), the terminal device performs paging monitoring in accordance with the configuration parameters of CN eDRX (including an eDRX cycle and/or a PTW length, for example). Optionally, the terminal device may perform the following step 540 and/or step 550.

In step 540, in the PTW of CN eDRX, the terminal device determines the DRX cycle in a sixth manner to perform paging monitoring.

In an example, the sixth manner is as follows: within the PTW of CN eDRX, the terminal device determines the minimum of a default DRX cycle and a configurable cycle as a target DRX cycle, and performs paging monitoring using the target DRX cycle; where the configurable cycle includes a UE specific DRX cycle and/or a RAN paging cycle.

In step 550, outside the PTW of CN eDRX, the terminal device determines the DRX cycle in a seventh manner to perform paging monitoring. The sixth manner is different from the seventh manner.

In an example, the seventh manner is as follows: outside the PTW of CN eDRX, the terminal device uses the RAN paging cycle to perform paging monitoring.

As shown in case (b) in FIG. 6, the white-filled rectangular box represents the PTW of CN eDRX. In the PTW of CN eDRX, the terminal device determines the target DRX cycle according to the above method, and performs paging monitoring using the target DRX cycle. For example, the black solid-line arrows in the PTW of CN eDRX in the figure represent the start position of each target DRX cycle. Outside the PTW of CN eDRX, the terminal device uses the RAN paging cycle to perform paging monitoring. For example, the dotted arrows outside the PTW of CN eDRX in the figure represent the starting position of each RAN paging cycle.

In another example, as shown in FIG. 5, in a case where the first information indicates that the serving cell neither supports CN eDRX nor supports RAN eDRX, the terminal device may perform the following step 560.

In step 560, the terminal device determines the minimum of the default DRX cycle and the configurable cycle as the target DRX cycle, and performs paging monitoring using the target DRX cycle; where the configurable cycle includes a UE specific DRX cycle and/or a RAN paging cycle.

As shown in case (c) in FIG. 6, the terminal device determines the target DRX cycle according to the above method, and uses the target DRX cycle to perform paging monitoring. For example, the black solid-line arrows in the figure represent the starting position of each target DRX cycle.

To sum up, in this embodiment, in the case where CN eDRX and RAN eDRX share the same set of configuration parameters, after determining the results on supporting of CN eDRX and/or RAN eDRX by the serving cell based on eDRX-related indication information, the terminal device performs paging monitoring using appropriate cycles in different time periods based on the results, so as to save power and not miss paging messages.

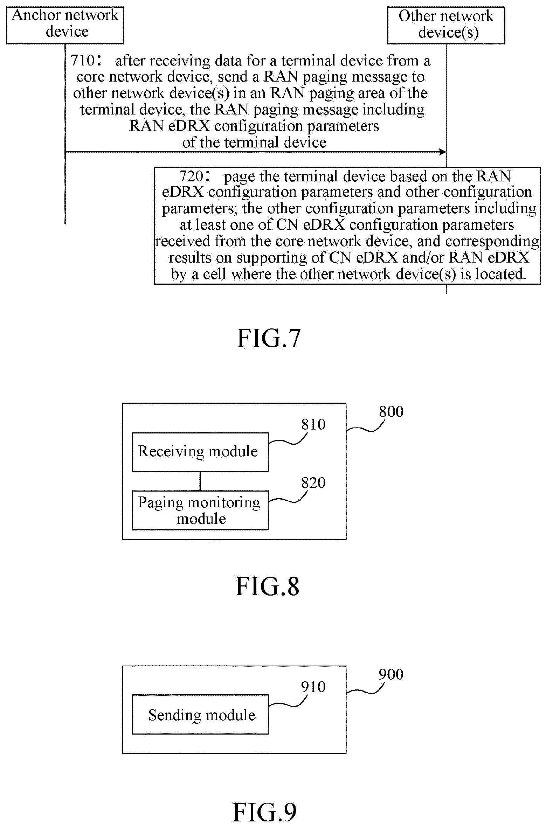

In an exemplary embodiment, after eDRX is introduced into RAN paging, eDRX configuration parameters may be transmitted between network devices through an air interface (such as an Xn interface). As shown in FIG. 7, the process may include the following steps.

In step 710, after receiving data for a terminal device from a core network device, an anchor network device of the terminal device sends a RAN paging message to other network devices in an RAN paging area of the terminal device, the RAN paging message including RAN eDRX configuration parameters of the terminal device.

Optionally, the RAN paging message is sent through an air interface (such as an Xn interface) between network devices.

Optionally, the RAN eDRX configuration parameters include an eDRX cycle and/or a PTW length.

In step 720, other network devices page the terminal device based on the RAN eDRX configuration parameters and other configuration parameters; where the other configuration parameters include at least one of the following: CN eDRX configuration parameters received from the core network device, and corresponding results on supporting of CN eDRX and/or RAN eDRX by cells where the other network devices are located.

Optionally, the other network devices determine a paging cycle for the terminal device based on the RAN eDRX configuration parameters and the other configuration parameters, and perform paging for the terminal device based on the paging cycle. The method of determining the paging cycle can be the same as those of determining the paging cycle by the terminal device described in the above embodiments, so that the network devices and the terminal device perform paging message sending and paging message monitoring according to the same paging cycle.

In this embodiment, after eDRX is introduced in RAN paging, the transmission of eDRX configuration parameters is added on the Xn interface, so that the network devices in the serving cell where the terminal device is located can page the terminal device based on the above configuration parameters, which is helpful to improve a success rate of receiving the paging message.

It should be noted that, in the foregoing method embodiments, the technical solutions of the present disclosure are introduced and described mainly from the perspective of interaction between the terminal device and the network device. The above steps performed by the terminal device can be independently implemented as a paging monitoring method on the terminal device side; and the above steps performed by the network device can be independently implemented as a paging monitoring method on the network device side.

Those described below are apparatus embodiments of the present disclosure, which can be used to implement the method embodiments of the present disclosure. For details not disclosed in the apparatus embodiments of the present disclosure, reference can be made to the method embodiments of the present disclosure.

Please refer to FIG. 8, which shows a block diagram of a paging monitoring apparatus provided by an embodiment of the present disclosure. The apparatus has the function of implementing the above method examples on the terminal device side, and the function may be implemented by hardware, or may be implemented by the hardware executing corresponding software. The apparatus may be the terminal device described above, or may be set in the terminal device. As shown in FIG. 8, the apparatus 800 may include a receiving module 810 and a paging monitoring module 820.

The receiving module 810 is configured to receive first information from a network device, where the first information is used to indicate whether a serving cell for a terminal device supports CN eDRX and/or RAN eDRX.

The paging monitoring module 820 is configured to determine a target occasion according to the first information to perform paging monitoring.

In an exemplary embodiment, the CN eDRX and the RAN eDRX are respectively configured with corresponding configuration parameters.

In an example, the paging monitoring module 820 is configured to: if the first information indicates that the serving cell supports both the CN eDRX and the RAN eDRX, within a PTW of the CN eDRX, determine a DRX cycle in a first manner to perform paging monitoring; and in a time period that is within a PTW of the RAN eDRX and does not overlap with the PTW of the CN eDRX, determine the DRX cycle in a second manner to perform paging monitoring; where the first manner and the second manner are different.

Optionally, the paging monitoring module 820 is configured to: within a paging time window (PTW) of the CN eDRX, determine the minimum of a default DRX cycle and a configurable cycle as a target DRX cycle, and perform paging monitoring using the target DRX cycle, where the configurable cycle includes a DRX cycle specific to the terminal device and/or a RAN paging cycle; and in a time period that is within the PTW of the RAN eDRX and does not overlap with the PTW of the CN eDRX, determine to perform paging monitoring using the default DRX cycle.

In another example, the paging monitoring module 820 is configured to: if the first information indicates that the serving cell supports the CN eDRX but does not support the RAN eDRX, in the PTW of the CN eDRX, determine the DRX cycle in a third manner to perform paging monitoring; and outside the PTW of the CN eDRX, determine the DRX cycle in a fourth manner to perform paging monitoring, where the third manner and the fourth manner are different.

Optionally, the paging monitoring module 820 is configured to: within the PTW of the CN eDRX, determine the minimum of the default DRX cycle and the configurable cycle as the target DRX cycle, and perform paging monitoring using the target DRX cycle, where the configurable cycle includes a DRX cycle specific to the terminal device and/or a RAN paging cycle; and outside the PTW of the CN eDRX, perform paging monitoring using the RAN paging cycle.

In another example, the paging monitoring module 820 is configured to: if the first information indicates that the serving cell neither supports the CN eDRX nor supports the RAN eDRX, determine the minimum of the default DRX cycle and the configurable cycle as the target DRX cycle, and perform paging monitoring using the target DRX cycle; where the configurable cycles includes a DRX cycle specific to the terminal device and/or a RAN paging cycle.

In an exemplary embodiment, the CN eDRX and the RAN eDRX share the same set of configuration parameters.

In an example, the paging monitoring module 820 is configured to: if the first information indicates that the serving cell supports both the CN eDRX and the RAN eDRX, within a PTW of the eDRX, determine a DRX cycle in a fifth manner to perform paging monitoring; and outside the PTW of the eDRX, not perform paging monitoring.

Optionally, the paging monitoring module 820 is configured to determine the minimum of the default DRX cycle and the configurable cycle as the target DRX cycle within the PTW of the eDRX, and use the target DRX cycle to perform paging monitoring, where the configurable cycle includes a DRX cycle specific to the terminal device and/or a RAN paging cycle.

In another example, the paging monitoring module 820 is configured to: if the first information indicates that the serving cell supports the CN eDRX but does not support the RAN eDRX, in a PTW of the CN eDRX, determine the DRX cycle in a sixth manner to perform paging monitoring; and outside the PTW of the CN eDRX, determine the DRX cycle in a seventh manner to perform paging monitoring, where the sixth manner and the seventh manner are different.

Optionally, the paging monitoring module 820 is configured to: within the PTW of the CN eDRX, determine the minimum of the default DRX cycle and the configurable cycle as the target DRX cycle, and use the target DRX cycle to perform paging monitoring, where the configurable cycle includes a DRX cycle specific to the terminal device and/or a RAN paging cycle; and outside the PTW of the CN eDRX, use the RAN paging cycle to perform paging monitoring.

In another example, the paging monitoring module 820 is configured to: if the first information indicates that the serving cell neither supports the CN eDRX nor supports the RAN eDRX, determine the minimum of the default DRX cycle and the configurable cycle as the target DRX cycle, and perform paging monitoring using the target DRX cycle, where the configurable cycles includes a DRX cycle specific to the terminal device and/or a RAN paging cycle.

In an exemplary embodiment, the configuration parameters include an eDRX cycle and/or a PTW length.

In an exemplary embodiment, an anchor network device of the terminal device is configured to, after receiving data for the terminal device from a core network device, send a RAN paging message to other network devices in a RAN paging area of the terminal device, where the RAN paging message includes RAN eDRX configuration parameters of the terminal device.

The other network devices are configured to page the terminal device based on the RAN eDRX configuration parameters and other configuration parameters; where the other configuration parameters include at least one of the following: CN eDRX configuration parameters received from the core network device, and corresponding results on supporting of CN eDRX and/or RAN eDRX by cells where the other network devices are located.

In an exemplary embodiment, the terminal device is in an inactive state.

To sum up, in the technical solutions provided by the embodiments of the present disclosure, the network device sends eDRX-related indication information to the terminal device in the serving cell, and indicates to the terminal device through the indication information whether the serving cell supports CN eDRX and/or RAN eDRX, so that the terminal device can perform paging monitoring according to the indication information, so as to perform paging monitoring at suitable occasions, achieving the purpose of saving power and not missing paging messages.

Please refer to FIG. 9, which shows a block diagram of a paging monitoring apparatus provided by another embodiment of the present disclosure. The apparatus has the function of implementing the above method examples on the network device side, and the function may be implemented by hardware, or may be implemented by hardware executing corresponding software. The apparatus may be the network device described above, or may be set in the network device. As shown in FIG. 9. the apparatus 900 may include a sending module 910.

The sending module 910 is configured to send first information to a terminal device, where the first information is used to indicate whether a serving cell for the terminal device supports CN eDRX and/or RAN eDRX.

In an exemplary embodiment, the CN eDRX and the RAN eDRX are respectively configured with corresponding configuration parameters.

In an example, in a case where the first information indicates that the serving cell supports both the CN eDRX and the RAN eDRX, within a paging time window (PTW) of the CN eDRX, the terminal device determines a DRX cycle to perform paging monitoring in a first manner; and in a time period that is within a PTW of the RAN eDRX and does not overlap with the PTW of the CN eDRX, the terminal device determines the DRX cycle to perform paging monitoring in a second manner, where the first manner is different from the second manner.

Optionally, within the paging time window (PTW) of the CN eDRX, the terminal device determines the minimum of a default DRX cycle and a configurable cycle as a target DRX cycle, and perform paging monitoring using the target DRX cycle, where the configurable cycle includes a DRX cycle specific to the terminal device and/or a RAN paging cycle; and in the time period that is within the PTW of the RAN eDRX and does not overlap with the PTW of the CN eDRX, the terminal device determines to perform paging monitoring using the default DRX cycle.

In another example, in a case where the first information indicates that the serving cell supports the CN eDRX but does not support the RAN eDRX, in the PTW of the CN eDRX, the terminal device determines the DRX cycle in a third manner to perform paging monitoring; and outside the PTW of the CN eDRX, the terminal device determines the DRX cycle in a fourth manner to perform paging monitoring, where the third manner and the fourth manner are different.

Optionally, within the PTW of the CN eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle; and outside the PTW of the CN eDRX, the terminal device performs paging monitoring using the RAN paging cycle.

In another example, in a case where the first information indicates that the serving cell neither supports the CN eDRX nor supports the RAN eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle. In an exemplary embodiment, the CN eDRX and the RAN eDRX share the same set of configuration parameters.

In an example, in a case where the first information indicates that the serving cell supports both the CN eDRX and the RAN eDRX, within a PTW of the eDRX, the terminal device determines the DRX cycle in a fifth manner to perform paging monitoring; and outside the PTW of the eDRX, the terminal device does not perform paging monitoring.

Optionally, within the PTW of the eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle.

In another example, in a case where the first information indicates that the serving cell supports the CN eDRX but does not support the RAN eDRX, in the PTW of the CN eDRX, the terminal device determines the DRX cycle in a sixth manner to perform paging monitoring; and outside the PTW of the CN eDRX, the terminal device determines the DRX cycle in a seventh manner to perform paging monitoring, where the sixth manner and the seventh manner are different.

Optionally, within the PTW of the CN eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle; and outside the PTW of the CN eDRX, the terminal device performs paging monitoring using the RAN paging cycle.

In another example, in a case where the first information indicates that the serving cell neither supports the CN eDRX nor supports the RAN eDRX, the terminal device determines the minimum of the default DRX cycle and the configurable cycle as the target DRX cycle, and performs paging monitoring using the target DRX cycle, where the configurable cycles includes a DRX cycle specific to the terminal device and/or a RAN paging cycle.

In an exemplary embodiment, the configuration parameters include an eDRX cycle and/or a PTW length.

In an exemplary embodiment, an anchor network device of the terminal device is configured to, after receiving data for the terminal device from a core network device, send a RAN paging message to other network devices in a RAN paging area of the terminal device, where the RAN paging message includes RAN eDRX configuration parameters of the terminal device.

The other network devices are configured to page the terminal device based on the RAN eDRX configuration parameters and other configuration parameters; where the other configuration parameters include at least one of the following: CN eDRX configuration parameters received from the core network device, and corresponding results on supporting of CN eDRX and/or RAN eDRX by cells where the other network devices are located.

In an exemplary embodiment, the terminal device is in an inactive state.

To sum up, in the technical solutions provided by the embodiments of the present disclosure, the network device sends eDRX-related indication information to the terminal device in the serving cell, and indicates to the terminal device through the indication information whether the serving cell supports CN eDRX and/or RAN eDRX, so that the terminal device can perform paging monitoring according to the indication information, so as to perform paging monitoring at suitable occasions, achieving the purpose of saving power and not missing paging messages.

It should be noted that when the apparatuses provided in the above embodiments realize the functions thereof, the division of the above-mentioned functional modules is used only as an example for illustration, and in actual applications, the above-mentioned functions can be allocated to be performed by different functional modules according to actual needs. That is, the content structure of the apparatuses is divided into different functional modules to complete all or part of the functions described above.

Regarding the apparatuses in the above embodiments, the specific manner in which each of the modules performs operation has been described in detail in the embodiments of the related methods, which will not be repeated here.

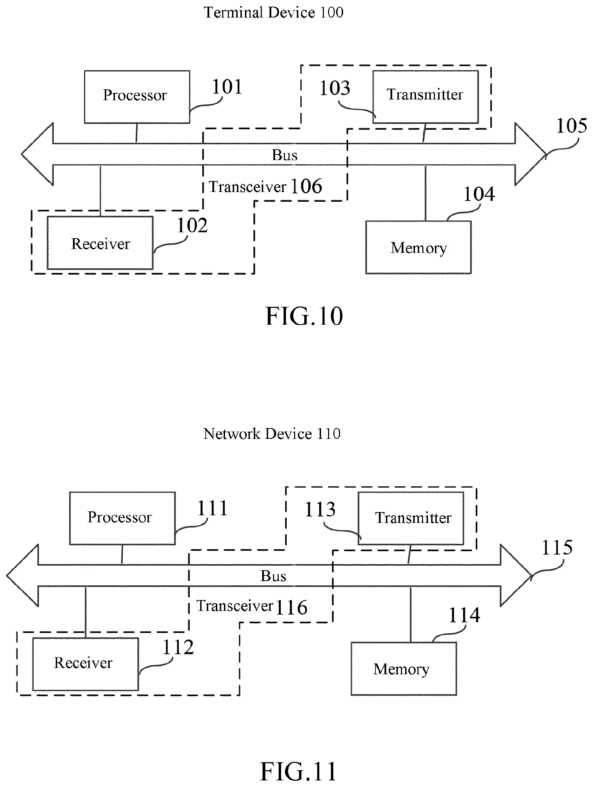

Please refer to FIG. 10, which shows a schematic structural diagram of a terminal device 100 provided by an embodiment of the present disclosure. The terminal device 100 may include a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 can be implemented as a transceiver 106, and the transceiver 106 can be a communication chip.

The memory 104 is connected to the processor 101 through the bus 105.

The memory 104 may be configured to store a computer program, and the processor is configured to execute the computer program, so as to implement the steps performed by the terminal device in the foregoing method embodiments.

In addition, the memory 104 can be realized by any type of volatile or nonvolatile storage device or a combination thereof, and the volatile or nonvolatile storage device includes but is not limited to: a Random Access Memory (RAM) and a Read Only Memory (ROM), a Erasable Programmable Read-Only Memory (EPROM), an Electrically Erasable Programmable Read-Only Memory (EEPROM ), a flash memory or other solid-state memory technologies, a Compact Disc Read-Only Memory (CD-ROM), a Digital Video Disc (DVD) or other optical storage, tape cartridges, tapes, disks storage or other magnetic storage devices.

In an exemplary embodiment, the transceiver 106 is configured to receive first information from a network device, where the first information is used to indicate whether a serving cell for the terminal device supports CN eDRX and/or RAN eDRX; and

the processor 101 is configured to determine a target occasion to perform paging monitoring according to the first information.

In an exemplary embodiment, the CN eDRX and the RAN eDRX are respectively configured with corresponding configuration parameters.

In an example, the processor 101 is configured to: if the first information indicates that the serving cell supports both the CN eDRX and the RAN eDRX, within a paging time window (PTW) of the CN eDRX, determine a DRX cycle in a first manner to perform paging monitoring; and in a time period that is within a PTW of the RAN eDRX and does not overlap with the PTW of the CN eDRX, determine the DRX cycle in a second manner to perform paging monitoring, where the first manner and the second manner are different.

Optionally, the processor 101 is configured to: within the paging time window (PTW) of the CN eDRX, determine the minimum of a default DRX cycle and a configurable cycle as a target DRX cycle, and perform paging monitoring using the target DRX cycle, where the configurable cycle includes a DRX cycle specific to the terminal device and/or a RAN paging cycle; and in the time period that is within the PTW of the RAN eDRX and does not overlap with the PTW of the CN eDRX, determine to perform paging monitoring using the default DRX cycle.

In another example, the processor 101 is configured to: if the first information indicates that the serving cell supports the CN eDRX but does not support the RAN eDRX, in the PTW of the CN eDRX, determine the DRX cycle in a third manner to perform paging monitoring; and outside the PTW of the CN eDRX, determine the DRX cycle in a fourth manner to perform paging monitoring; where the third manner and the fourth manner are different.

Optionally, the processor 101 is configured to: within the PTW of the CN eDRX, determine the minimum of the default DRX cycle and the configurable cycle as the target DRX cycle, and perform paging monitoring using the target DRX cycle, where the configurable cycle includes a DRX cycle specific to the terminal device and/or a RAN paging cycle; and outside the PTW of the CN eDRX, perform paging monitoring using the RAN paging cycle.

In another example, the processor 101 is configured to: if the first information indicates that the serving cell neither supports the CN eDRX nor supports the RAN eDRX, determine the minimum of the default DRX cycle and the configurable cycle as the target DRX cycle, and perform paging monitoring using the target DRX cycle; where the configurable cycles includes a DRX cycle specific to the terminal device and/or a RAN paging cycle.

In an exemplary embodiment, the CN eDRX and the RAN eDRX share the same set of configuration parameters.

In an example, the processor 101 is configured to: if the first information indicates that the serving cell supports both the CN eDRX and the RAN eDRX, within the PTW of the eDRX, determine the DRX cycle in a fifth manner to perform paging monitoring; and outside the PTW of the eDRX, not perform paging monitoring.

Optionally, the processor 101 is configured to: within the PTW of the eDRX, determine the minimum of the default DRX cycle and the configurable cycle as the target DRX cycle, and perform paging monitoring using the target DRX cycle; where the configurable cycle includes a DRX cycle specific to the terminal device and/or a RAN paging cycle.

In another example, the processor 101 is configured to: if the first information indicates that the serving cell supports the CN eDRX but does not support the RAN eDRX, within the PTW of the CN eDRX, determine the DRX cycle in a sixth manner to perform paging monitoring; and outside the PTW of the CN eDRX, determine the DRX cycle in a seventh manner to perform paging monitoring; where the sixth manner and the seventh manner are different.

Optionally, the processor 101 is configured to: within the PTW of the CN eDRX, determine the minimum of the default DRX cycle and the configurable cycle as the target DRX cycle, and perform paging monitoring using the target DRX cycle, where the configurable cycle includes a DRX cycle specific to the terminal device and/or a RAN paging cycle; and outside the PTW of the CN eDRX, perform paging monitoring using the RAN paging cycle.

In another example, the processor 101 is configured to: if the first information indicates that the serving cell neither supports the CN eDRX nor supports the RAN eDRX, determine the minimum of the default DRX cycle and the configurable cycle as the target DRX cycle, and perform paging monitoring using the target DRX cycle; where the configurable cycles includes a DRX cycle specific to the terminal device and/or a RAN paging cycle.

In an exemplary embodiment, the configuration parameters include an eDRX cycle and/or a PTW length.

In an exemplary embodiment, an anchor network device of the terminal device is configured to, after receiving data for the terminal device from a core network device, send a RAN paging message to other network devices in a RAN paging area of the terminal device, where the RAN paging message includes RAN eDRX configuration parameters of the terminal device.

The other network devices are configured to page the terminal device based on the RAN eDRX configuration parameters and other configuration parameters; where the other configuration parameters include at least one of the following: CN eDRX configuration parameters received from the core network device, and corresponding results on supporting of CN eDRX and/or RAN eDRX by the cells where the other network devices are located.

In an exemplary embodiment, the terminal device is in an inactive state.

Please refer to FIG. 11, which shows a schematic structural diagram of a network device 110 provided by an embodiment of the present disclosure. The network device 110 may include a processor 111, a receiver 112, a transmitter 113, a memory 114 and a bus 115.

The processor 111 includes one or more processing cores, and the processor 111 executes various functional applications and information processing by running software programs and modules.

The receiver 112 and the transmitter 113 can be implemented as a transceiver 116, and the transceiver 116 can be a communication chip.

The memory 114 is connected to the processor 111 through the bus 115.

The memory 114 may be configured to store a computer program, and the processor 111 is configured to execute the computer program, so as to implement the steps performed by the network device in the foregoing method embodiments.

In addition, the memory 114 can be realized by any type of volatile or nonvolatile storage device or a combination thereof, and the volatile or nonvolatile storage device includes but is not limited to: a Random-Access Memory (RAM) and a Read-Only Memory (ROM), a Erasable Programmable Read-Only Memory (EPROM), an Electrically Erasable Programmable Read-Only Memory (EEPROM ), a flash memory or other solid-state memory technologies, a Compact Disc Read-Only Memory (CD-ROM), a Digital Video Disc (DVD) or other optical storage, tape cartridges, tapes, disks storage or other magnetic storage devices.

In an exemplary embodiment, the transceiver 116 is configured to send first information to a terminal device, where the first information is used to indicate whether a serving cell for the terminal device supports CN eDRX and/or RAN eDRX.

In an exemplary embodiment, the CN eDRX and the RAN eDRX are respectively configured with corresponding configuration parameters.

In an example, in a case where the first information indicates that the serving cell supports both the CN eDRX and the RAN eDRX, within a paging time window (PTW) of the CN eDRX, the terminal device determines a DRX cycle in a first manner to perform paging monitoring; and in a time period that is within a PTW of the RAN eDRX and does not overlap with the PTW of the CN eDRX, the terminal device determines the DRX cycle in a second manner to perform paging monitoring; where the first manner is different from the second manner.

Optionally, within the paging time window (PTW) of the CN eDRX, the terminal device determines the minimum of a default DRX cycle and a configurable cycle as a target DRX cycle, and perform paging monitoring using the target DRX cycle, where the configurable cycle includes a DRX cycle specific to the terminal device and/or a RAN paging cycle; and in the time period that is within the PTW of the RAN eDRX and does not overlap with the PTW of the CN eDRX, the terminal device determines to perform paging monitoring using the default DRX cycle.

In another example, in a case where the first information indicates that the serving cell supports the CN eDRX but does not support the RAN eDRX, within the PTW of the CN eDRX, the terminal device determines the DRX cycle in a third manner to perform paging monitoring; and outside the PTW of the CN eDRX, the terminal device determines the DRX cycle in a fourth manner to perform paging monitoring; where the third manner and the fourth manner are different.

Optionally, within the PTW of the CN eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle; and outside the PTW of the CN eDRX, the terminal device performs paging monitoring using the RAN paging cycle.

In another example, in a case where the first information indicates that the serving cell neither supports the CN eDRX nor supports the RAN eDRX, the terminal device determines the minimum of the default DRX cycle and the configurable cycle as the target DRX cycle, and performs paging monitoring using the target DRX cycle; where the configurable cycles includes a DRX cycle specific to the terminal device and/or a RAN paging cycle.

In an exemplary embodiment, the CN eDRX and the RAN eDRX share the same set of configuration parameters.

In an example, in a case where the first information indicates that the serving cell supports both the CN eDRX and the RAN eDRX, within a PTW of the eDRX, the terminal device determines the DRX cycle in a fifth manner to perform paging monitoring; and outside the PTW of the eDRX, the terminal device does not perform paging monitoring.

Optionally, within the PTW of the eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle.

In another example, in a case where the first information indicates that the serving cell supports the CN eDRX but does not support the RAN eDRX, in the PTW of the CN eDRX, the terminal device determines the DRX cycle in a sixth manner to perform paging monitoring; and outside the PTW of the CN eDRX, the terminal device determines the DRX cycle in a seventh manner to perform paging monitoring; where the sixth manner and the seventh manner are different.

Optionally, within the PTW of the CN eDRX, the terminal device determines the minimum of the default DRX cycle and the configurable cycle as the target DRX cycle, and performs paging monitoring using the target DRX cycle, where the configurable cycle includes a DRX cycle specific to the terminal device and/or a RAN paging cycle; and outside the PTW of the CN eDRX, the terminal device performs paging monitoring using the RAN paging cycle.

In another example, in a case where the first information indicates that the serving cell neither supports the CN eDRX nor supports the RAN eDRX, the terminal device determines the minimum of the default DRX cycle and the configurable cycle as the target DRX cycle, and performs paging monitoring using the target DRX cycle; where the configurable cycles includes a DRX cycle specific to the terminal device and/or a RAN paging cycle.

In an exemplary embodiment, the configuration parameters include an eDRX cycle and/or a PTW length.

In an exemplary embodiment, an anchor network device of the terminal device is configured to, after receiving data for the terminal device from a core network device, send a RAN paging message to other network devices in a RAN paging area of the terminal device, where the RAN paging message includes RAN eDRX configuration parameters of the terminal device.

The other network devices are configured to page the terminal device based on the RAN eDRX configuration parameters and other configuration parameters; where the other configuration parameters include at least one of the following: CN eDRX configuration parameters received from the core network device, and corresponding results on supporting of CN eDRX and/or RAN eDRX by the cells where the other network devices are located.

In an exemplary embodiment, the terminal device is in an inactive state.

An embodiment not being claimed, of the present disclosure also provides a computer-readable storage medium that has stored thereon a computer program, and the computer program is used for being executed by a processor of a terminal device, so as to implement the above paging monitoring method on the terminal device side.

An embodiment, not being claimed, of the present disclosure also provides a computer-readable storage medium that has stored thereon a computer program, and the computer program is used for being executed by a processor of a network device, so as to implement the above paging monitoring method on the network device side.

Optionally, the computer-readable storage medium may include a Read-Only Memory (ROM), a Random-Access Memory (RAM), a Solid State Drives (SSD), an optical disc, or the like. The random access memory may include a Resistance Random Access Memory (ReRAM) and a Dynamic Random Access Memory (DRAM).

An embodiment, not being claimed, of the present disclosure also provides a chip that includes a programmable logic circuit and/or program instructions, and the chip, when running on a terminal device, is configured to implement the above paging monitoring method on the terminal device side.

An embodiment, not being claimed, of the present disclosure also provides a chip that includes a programmable logic circuit and/or program instructions, and the chip, when running on a network device, is configured to implement the above paging monitoring method on the network device side.

An embodiment, not being claimed, of the present disclosure also provides a computer program product or computer program, the computer program product or computer program includes computer instructions, the computer instructions are stored in a computer-readable storage medium, and a processor of a terminal device reads from the computer-readable storage medium and executes the computer instructions, so as to implement the above paging monitoring method on the terminal device side.

An embodiment, not being claimed, of the present disclosure also provides a computer program product or computer program, the computer program product or computer program includes computer instructions, the computer instructions are stored in a computer-readable storage medium, and a processor of a network device reads from the computer-readable storage medium and executes the computer instructions, so as to implement the above paging monitoring method on the network device side.

It should be understood that "indicate (indicating)" mentioned in the embodiments of the present disclosure may be a direct indication or an indirect indication, or may represent an associated relationship. For example, if A indicates B, it may represent that A directly indicates B, for example, B can be obtained from A; or it may represent that A indicates B indirectly, for example, A indicates C, and B can be obtained from C; or it may represent that there is an associated relationship between A and B.

In the description of the embodiments of the present disclosure, the term "corresponding" may indicate that there is a direct or indirect corresponding relationship between two objects, or may indicate that there is an associated relationship, a relationship of indicating and being indicated, or a relationship of configuring and being configured between the two objects, and so on.

The expression "multiple" mentioned herein means two or more. "And/or" describes the association relationship of the associated objects, indicating that there can be three types of relationships. For example, A and/or B may refers to three cases where A exists alone, A and B exist at the same time, and B exists alone. The character "/" generally indicates that the related objects are in an "or" relationship.

In addition, the numbers of the steps described herein only exemplarily illustrate a possible performing order of the steps. In some other embodiments, the above steps may not be performed according to the order of the numbers, for example, two steps with different numbers are performed at the same time, or two steps with different numbers are performed in a reverse order as that shown in the illustration, which is not limited in the embodiments of the present disclosure.

Those skilled in the art can recognize that, in the foregoing one or more examples, the functions described in the embodiments of the present disclosure may be implemented by hardware, software, firmware or any combination thereof. When implemented in software, the functions may be stored on a computer-readable medium or transmitted as one or more instructions or codes over the computer-readable medium. The computer-readable medium includes both a computer storage medium and a communication media including any medium that facilitates transfer of a computer program from one place to another. The storage medium may be any available medium that can be accessed by a general purpose or special purpose computer.

Those described above are only exemplary embodiments of the present disclosure, and are not intended to limit the present disclosure.

**Claims**

**1.** A paging monitoring method performed by a terminal device, and the method comprises:

receiving (210) first information from a network device, wherein the first information is used to indicate whether a serving cell of the terminal device supports Core Network , CN, extended Discontinuous Reception , eDRX, and/or Radio Access Network , RAN, eDRX; and

determining (220), according to the first information, a target occasion to perform paging monitoring,

wherein the terminal device is in an inactive state,

wherein the CN eDRX and the RAN eDRX are respectively configured with corresponding configuration parameters, and

the method being **characterized in that**:

the determining, according to the first information, the DRX cycle to perform paging monitoring comprises:

in a case where the first information indicates that the serving cell supports the CN eDRX but does not support the RAN eDRX, within a paging time window , PTW, of the CN eDRX, determining a DRX cycle in a third manner to perform paging monitoring; and

outside the PTW of the CN eDRX, determining the DRX cycle in a fourth manner to perform paging monitoring,

wherein the third manner is different from the fourth manner.

2. The method according to claim 1, wherein the determining, according to the first information, the target occasion to perform paging monitoring comprises:

in a case where the first information indicates that the serving cell supports both the CN eDRX and the RAN eDRX, within a paging time window PTW, of the CN eDRX, determining a DRX cycle in a first manner to perform paging monitoring;

in a time period that is within a PTW of the RAN eDRX and does not overlap with the PTW of the CN eDRX, determining the DRX cycle in a second manner to perform paging monitoring;

wherein the first manner is different from the second manner,

wherein the determining the DRX cycle in the first manner to perform paging monitoring comprises:

determining the minimum of a default DRX cycle and a configurable cycle as a target DRX cycle, and performing paging monitoring using the target DRX cycle, wherein the configurable cycle comprises a DRX cycle specific to the terminal device and/or a RAN paging cycle;

the determining the DRX cycle in the second manner to perform paging monitoring comprises:

determining to perform paging monitoring using the default DRX cycle.

3. The method according to claim 1,

wherein the determining the DRX cycle in the third manner to perform paging monitoring comprises:

determining the minimum of a default DRX cycle and a configurable cycle as a target DRX cycle, and performing paging monitoring using the target DRX cycle, wherein the configurable cycle comprises a DRX cycle specific to the terminal device and/or a RAN paging cycle;

the determining the DRX cycle in the fourth manner to perform paging monitoring comprises:

performing paging monitoring using the RAN paging cycle.

4. The method according to claim 1, wherein the determining, according to the first information, the target occasion to perform paging monitoring comprises:

in a case where the first information indicates that the serving cell neither supports the CN eDRX nor supports the RAN eDRX, determining the minimum of a default DRX cycle and a configurable cycle as a target DRX cycle, and performing paging monitoring using the target DRX cycle, wherein the configurable cycle comprises a DRX cycle specific to the terminal device and/or a RAN paging cycle.

5. A paging monitoring method performed by a network device, and the method comprises:

sending (210) first information to a terminal device, wherein the first information is used to indicate whether a serving cell of the terminal device supports Core Network, CN, extended Discontinuous Reception , eDRX, and/or Radio Access Network , RAN, eDRX,

wherein the terminal device is in an inactive state,

wherein the CN eDRX and the RAN eDRX are respectively configured with corresponding configuration parameters, and

the method being **characterized in that**

in a case where the first information indicates that the serving cell supports the CN eDRX but does not support the RAN eDRX,

within a PTW of the CN eDRX, the network device determines a DRX cycle in a third manner to perform paging for the terminal device, and

outside the PTW of the CN eDRX, the network device determines the DRX cycle in a fourth manner to perform paging for the terminal device,

wherein the third manner is different from the fourth manner.

6. The method according to claim 5, wherein in a case where the first information indicates that the serving cell supports both the CN eDRX and the RAN eDRX,

within a paging time window , PTW, of the CN eDRX, the network device determines a DRX cycle in a first manner to perform paging for the terminal device;

in a time period that is within a PTW of the RAN eDRX and does not overlap with the PTW of the CN eDRX, the network device determines the DRX cycle in a second manner to perform paging for the terminal device;

wherein the first manner is different from the second manner,

wherein,

within the PTW of the CN eDRX, the network device determines the minimum of a default DRX cycle and a configurable cycle as a target DRX cycle, and performs paging using the target DRX cycle, wherein the configurable cycle comprises a DRX cycle specific to the terminal device and/or a RAN paging cycle;

in the time period that is within the PTW of the RAN eDRX and does not overlap with the PTW of the CN eDRX, the network device determines to perform paging using the default DRX cycle.

7. The method according to claim 5,

wherein,

within the PTW of the CN eDRX, the network device determines the minimum of a default DRX cycle and a configurable cycle as a target DRX cycle, and performs paging using the target DRX cycle, wherein the configurable cycle comprises a DRX cycle specific to the terminal device and/or a RAN paging cycle;

outside the PTW of the CN eDRX, the network device performs paging using the RAN paging cycle.

8. The method according to claim 5, wherein in a case where the first information indicates that the serving cell neither supports the CN eDRX nor supports the RAN eDRX,

the network device determines the minimum of a default DRX cycle and a configurable cycle as a target DRX cycle, and performs paging using the target DRX cycle, wherein the configurable cycle comprises a DRX cycle specific to the terminal device and/or a RAN paging cycle.

9. The method according to any one of claims 5 to 8, wherein the configuration parameters comprise an eDRX cycle and/or a PTW length.

10. The method according to any one of claims 5 to 9, wherein

the network device is configured to receive a RAN paging message sent from an anchor network device of the terminal device after the anchor network device receives data for the terminal device from a core network device, wherein the RAN paging message comprises RAN eDRX configuration parameters of the terminal device;

the network device is configured to page the terminal device based on the RAN eDRX configuration parameters and other configuration parameters; wherein the other configuration parameters comprise at least one of the following: CN eDRX configuration parameters received from the core network device, and corresponding results on supporting of the CN eDRX and/or the RAN eDRX by a cell where the network device is located.

11. A terminal device (100) comprising

a memory (104);
a transceiver (106); and
a processor (101) coupled to the memory and the transceiver;

wherein the processor is configured to execute instructions stored in the memory to cause the terminal device to perform the method according to any one of claims 1 to 4.

12. A network device comprising

a memory (114);
a transceiver (116); and
a processor (111) coupled to the memory and the transceiver;
wherein the processor is configured to execute instructions stored in the memory to cause the network device to perform the method according to any one of claims 5 to 10.

**Patentansprüche**

1. Funkrufüberwachungsverfahren, das durch eine Endgerätvorrichtung durchgeführt wird, wobei das Verfahren umfasst:

Empfangen (210) von ersten Informationen von einer Netzwerkvorrichtung, wobei die ersten Informationen verwendet werden, um anzugeben, ob eine bedienende Zelle der Endgerätvorrichtung den erweiterten diskontinuierlichen Empfang im Kernnetz (Core Network, CN, Extended Discontinuous Reception, eDRX) und/oder eDRX im Funkzugangsnetz (Radio Access Network, RAN), unterstützt; und
Bestimmen (220), gemäß den ersten Informationen, eines Sollzeitpunkts zum Durchführen einer Funkrufüberwachung,
wobei sich die Endgerätvorrichtung in einem inaktiven Zustand befindet,
wobei der CN eDRX und der RAN eDRX jeweils mit entsprechenden Konfigurationsparametern konfiguriert sind, und
wobei das Verfahren **dadurch gekennzeichnet ist, dass**:
das Bestimmen, gemäß den ersten Informationen, des DRX-Zyklus zum Durchführen einer Funkrufüberwachung umfasst:

in einem Fall, in dem die ersten Informationen angeben, dass die bedienende Zelle den CN eDRX unterstützt, aber nicht den RAN eDRX unterstützt, innerhalb eines Funkrufzeitfensters, PTW (Paging Time Window), des CN eDRX,
Bestimmen eines DRX-Zyklus auf eine dritte Weise, um eine Funkrufüberwachung durchzuführen; und
außerhalb des PTW des CN eDRX, Bestimmen des DRX-Zyklus auf eine vierte Weise, um eine Funkrufüberwachung durchzuführen,
wobei die dritte Weise von der vierten Weise verschieden ist.

2. Verfahren gemäß Anspruch 1, wobei das Bestimmen, gemäß den ersten Informationen, des Sollzeitpunkts zum Durchführen einer Funkrufüberwachung umfasst:

in einem Fall, in dem die ersten Informationen angeben, dass die bedienende Zelle sowohl den CN eDRX als auch den RAN eDRX unterstützt, innerhalb eines Funkrufzeitfensters, PTW (Paging Time Window), des CN eDRX, Bestimmen eines DRX-Zyklus auf eine erste Weise, um eine Funkrufüberwachung durchzuführen;
in einem Zeitraum, der innerhalb eines PTW des RAN eDRX liegt und sich nicht mit dem PTW des CN eDRX überschneidet, Bestimmen des DRX-Zyklus auf eine zweite Weise, um eine Funkrufüberwachung durchzuführen;
wobei die erste Weise von der zweiten Weise verschieden ist,
wobei das Bestimmen des DRX-Zyklus auf die erste Weise, um eine Funkrufüberwachung durchzuführen, umfasst:

Bestimmen des Minimums eines Standard-DRX-Zyklus und eines konfigurierbaren Zyklus als Ziel-DRX-Zyklus und Durchführen einer Funkrufüberwachung unter Verwendung des Ziel-DRX-Zyklus, wobei der konfigurierbare Zyklus einen für die Endgerätvorrichtung spezifischen DRX-Zyklus und/oder einen RAN-Funkrufzyklus umfasst;
wobei das Bestimmen des DRX-Zyklus auf die zweite Weise, um eine Funkrufüberwachung durchzuführen, umfasst:
Bestimmen, die Funkrufüberwachung unter Verwendung des Standard-DRX-Zyklus durchzuführen.

3. Verfahren gemäß Anspruch 1,
wobei das Bestimmen des DRX-Zyklus auf die dritte Weise, um eine Funkrufüberwachung durchzuführen, umfasst:

Bestimmen des Minimums eines Standard-DRX-Zyklus und eines konfigurierbaren Zyklus als Ziel-DRX-Zyklus und Durchführen einer Funkrufüberwachung unter Verwendung des Ziel-DRX-Zyklus, wobei der konfigurierbare Zyklus einen für die Endgerätvorrichtung spezifischen DRX-Zyklus und/oder einen RAN-Funkrufzyklus umfasst; wobei das Bestimmen des DRX-Zyklus auf die vierte Weise, um eine Funkrufüberwachung durchzuführen, umfasst:

Durchführen der Funkrufüberwachung unter Verwendung des RAN-Funkrufzyklus.

4. Verfahren gemäß Anspruch 1, wobei das Bestimmen, gemäß den ersten Informationen, des Sollzeitpunkts zum Durchführen einer Funkrufüberwachung umfasst:

in einem Fall, in dem die ersten Informationen angeben, dass die bedienende Zelle weder den CN eDRX noch den RAN eDRX unterstützt, Bestimmen des Minimums eines Standard-DRX-Zyklus und eines konfigurierbaren Zyklus als Ziel-DRX-Zyklus und Durchführen einer Funkrufüberwachung unter Verwendung des Ziel-DRX-Zyklus, wobei der konfigurierbare Zyklus einen für die Endgerätvorrichtung spezifischen DRX-Zyklus und/oder einen RAN-Funkrufzyklus umfasst.

5. Funkrufüberwachungsverfahren, das durch eine Netzwerkvorrichtung durchgeführt wird, wobei das Verfahren umfasst:

Senden (210) von ersten Informationen an eine Endgerätvorrichtung, wobei die ersten Informationen verwendet werden, um anzugeben, ob eine bedienende Zelle der Endgerätvorrichtung den erweiterten diskontinuierlichen Empfang im Kernnetz (Core Network, CN, Extended Discontinuous Reception, eDRX) und/oder eDRX im Funkzugangsnetz (Radio Access Network, RAN), unterstützt, wobei sich die Endgerätvorrichtung in einem inaktiven Zustand befindet, wobei der CN eDRX und der RAN eDRX jeweils mit entsprechenden Konfigurationsparametern konfiguriert sind, und

wobei das Verfahren **dadurch gekennzeichnet ist, dass** in einem Fall, in dem die ersten Informationen angeben, dass die bedienende Zelle den CN eDRX unterstützt, aber nicht den RAN eDRX unterstützt, innerhalb eines PTW des CN eDRX die Netzwerkvorrichtung einen DRX-Zyklus auf eine dritte Weise bestimmt, um einen Funkruf für die Endgerätvorrichtung durchzuführen, und

außerhalb des PTW des CN eDRX die Netzwerkvorrichtung den DRX-Zyklus auf eine vierte Weise bestimmt, um einen Funkruf für die Endgerätvorrichtung durchzuführen, wobei die dritte Weise von der vierten Weise verschieden ist.

6. Verfahren gemäß Anspruch 5, wobei in einem Fall, in dem die ersten Informationen angeben, dass die bedienende Zelle sowohl den CN eDRX als auch den RAN eDRX unterstützt, innerhalb eines Funkrufzeitfensters, PTW (Paging Time Window), des CN eDRX, die Netzwerkvorrichtung einen DRX-Zyklus auf eine erste Weise bestimmt, um einen Funkruf für die Endgerätvorrichtung durchzuführen;

in einem Zeitraum, der innerhalb eines PTW des RAN eDRX liegt und sich nicht mit dem PTW des CN eDRX überschneidet, die Netzwerkvorrichtung den DRX-Zyklus auf eine zweite Weise bestimmt, um einen Funkruf für die Endgerätvorrichtung durchzuführen; wobei die erste Weise von der zweiten Weise verschieden ist, wobei

innerhalb des PTW des CN eDRX die Netzwerkvorrichtung das Minimum eines Standard-DRX-Zyklus und eines konfigurierbaren Zyklus als Ziel-DRX-Zyklus bestimmt und einen Funkruf unter Verwendung des Ziel-DRX-Zyklus durchführt, wobei der konfigurierbare Zyklus einen für die Endgerätvorrichtung spezifischen DRX-Zyklus und/oder einen RAN-Funkrufzyklus umfasst;

in dem Zeitraum, der innerhalb des PTW des RAN eDRX liegt und sich nicht mit dem PTW des CN eDRX überschneidet, die Netzwerkvorrichtung bestimmt, Funkruf unter Verwendung des Standard-DRX-Zyklus durchzuführen.

7. Verfahren gemäß Anspruch 5, wobei

innerhalb des PTW des CN eDRX die Netzwerkvorrichtung das Minimum eines Standard-DRX-Zyklus und eines konfigurierbaren Zyklus als Ziel-DRX-Zyklus bestimmt und einen Funkruf unter Verwendung des Ziel-DRX-Zyklus durchführt, wobei der konfigurierbare Zyklus einen für die Endgerätvorrichtung spezifischen DRX-Zyklus und/oder einen RAN-Funkrufzyklus umfasst;

außerhalb das PTW des CN eDRX die Netzwerkvorrichtung einen Funkruf unter Verwendung des RAN-Funkrufzyklus durchführt.

8. Verfahren gemäß Anspruch 5, wobei in einem Fall, in dem die ersten Informationen angeben, dass die bedienende Zelle weder den CN eDRX noch den RAN eDRX unterstützt, die Netzwerkvorrichtung das Minimum eines Standard-DRX-Zyklus und eines konfigurierbaren Zyklus als Ziel-DRX-Zyklus bestimmt und einen Funkruf unter Verwendung des Ziel-DRX-Zyklus durchführt, wobei der konfigurierbare Zyklus einen für die Endgerätvorrichtung spezifischen DRX-Zyklus und/oder einen RAN-Funkrufzyklus umfasst.

9. Verfahren gemäß einem der Ansprüche 5 bis 8, wobei die Konfigurationsparameter einen eDRX-Zyklus und/oder eine PTW-Länge umfassen.

10. Verfahren gemäß einem der Ansprüche 5 bis 9, wobei die Netzwerkvorrichtung dafür ausgelegt ist, eine RAN-Funkrufnachricht zu empfangen, die von einer Anker-Netzwerkvorrichtung der Endgerätvorrichtung gesendet wird, nachdem die Anker-Netzwerkvorrichtung Daten für die Endgerätvorrichtung von einer Kernnetzwerkvorrichtung empfangen hat, wobei die RAN-Funkrufnachricht RAN-eDRX-Konfigurationsparameter der Endgerätvorrichtung umfasst;
die Netzwerkvorrichtung dafür ausgelegt ist, die Endgerätvorrichtung basierend auf den RAN-eDRX-Konfigurationsparametern und anderen Konfigurationsparametern zu rufen; wobei die ersten Konfigurationsparameter wenigstens eines der folgenden umfassen: CN-eDRX-Konfigurationsparameter, die von der Kernnetzwerkvorrichtung empfangen werden, und entsprechende Ergebnisse zur Unterstützung des CN-eDRX und/oder des RAN-eDRX durch eine Zelle, in der sich die Netzwerkvorrichtung befindet.

11. Endgerätvorrichtung (100), umfassend:

   einen Speicher (104);
   einen Sendeempfänger (106); und
   einen Prozessor (101), der mit dem Speicher und dem Sendeempfänger gekoppelt ist;
   wobei der Prozessor dafür ausgelegt ist, im Speicher gespeicherte Anweisungen auszuführen, um die Endgerätvorrichtung zu veranlassen, das Verfahren gemäß einem der Ansprüche 1 bis 4 durchzuführen.

12. Netzwerkvorrichtung, umfassend:

   einen Speicher (114);
   einen Sendeempfänger (116); und
   einen Prozessor (111), der mit dem Speicher und dem Sendeempfänger gekoppelt ist;
   wobei der Prozessor dafür ausgelegt ist, im Speicher gespeicherte Anweisungen auszuführen, um die Netzwerkvorrichtung zu veranlassen, das Verfahren gemäß einem der Ansprüche 5 bis 10 durchzuführen.

**Revendications**

1. Procédé de surveillance de radiomessagerie réalisé par un dispositif terminal, et le procédé comprenant :

   la réception (210) d'une première information provenant d'un dispositif de réseau, la première information étant utilisée pour indiquer si une cellule de desserte du dispositif terminal prend en charge la réception discontinue étendue, eDRX, de réseau central, CN, et/ou l'eDRX de réseau d'accès radio, RAN ; et
   la détermination (220), selon la première information d'une occasion cible pour réaliser une surveillance de radiomessagerie,
   dans lequel le dispositif terminal est dans un état inactif,
   dans lequel l'eDRX de CN et l'eDRX de RAN sont configurés respectivement avec des paramètres de configuration correspondants, et
   le procédé étant **caractérisé en ce que** :
   la détermination, selon la première information, du cycle DRX pour réaliser une surveillance de radiomessagerie comprend :

      dans un cas où la première information indique que la cellule de desserte prend en charge l'eDRX de CN mais ne prend pas en charge l'eDRX de RAN, au sein d'une fenêtre temporelle de radiomessagerie, PTW, de l'eDRX de CN, la détermination d'un cycle DRX suivant une troisième manière pour réaliser une surveillance de radiomessagerie ; et

en dehors de la PTW de l'eDRX de CN, la détermination du cycle DRX suivant une quatrième manière pour réaliser une surveillance de radiomessagerie,

dans lequel la troisième manière est différente de la quatrième manière.

2. Procédé selon la revendication 1, dans lequel la détermination, selon la première information, de l'occasion cible pour réaliser une surveillance de radiomessagerie comprend :

dans un cas où la première information indique que la cellule de desserte prend en charge à la fois l'eDRX de CN et l'eDRX de RAN, au sein d'une fenêtre temporelle de radiomessagerie, PTW, de l'eDRX de CN, la détermination d'un cycle DRX suivant une première manière pour réaliser une surveillance de radiomessagerie ;

dans un intervalle de temps qui se trouve au sein d'une PTW de l'eDRX de RAN et ne chevauche pas la PTW de l'eDRX de CN, la détermination du cycle DRX suivant une deuxième manière pour réaliser une surveillance de radiomessagerie ;

dans lequel la première manière est différente de la deuxième manière,

dans lequel la détermination du cycle DRX suivant la première manière pour réaliser une surveillance de radiomessagerie comprend :

la détermination du minimum d'un cycle DRX par défaut et d'un cycle configurable en tant que cycle DRX cible, et la réalisation d'une surveillance de radiomessagerie en utilisant le cycle DRX cible, le cycle configurable comprenant un cycle DRX spécifique au dispositif terminal et/ou un cycle de radiomessagerie de RAN ;

la détermination du cycle DRX suivant la deuxième manière pour réaliser une surveillance de radiomessagerie comprend :

la détermination pour réaliser une surveillance de radiomessagerie en utilisant le cycle DRX par défaut.

3. Procédé selon la revendication 1,

dans lequel la détermination du cycle DRX suivant la troisième manière pour réaliser une surveillance de radiomessagerie comprend :

la détermination du minimum d'un cycle DRX par défaut et d'un cycle configurable en tant que cycle DRX cible, et la réalisation d'une surveillance de radiomessagerie en utilisant le cycle DRX cible, le cycle configurable comprenant un cycle DRX spécifique au dispositif terminal et/ou un cycle de radiomessagerie de RAN ;

la détermination du cycle DRX suivant la quatrième manière pour réaliser une surveillance de radiomessagerie comprend :

la réalisation d'une surveillance de radiomessagerie en utilisant le cycle de radiomessagerie de RAN.

4. Procédé selon la revendication 1, dans lequel la détermination, selon la première information, de l'occasion cible pour réaliser une surveillance de radiomessagerie comprend :

dans un cas où la première information indique que la cellule de desserte ne prend en charge ni l'eDRX de CN ni prend en charge l'eDRX de RAN, la détermination du minimum d'un cycle DRX par défaut et d'un cycle configurable en tant que cycle DRX cible, et la réalisation d'une surveillance de radiomessagerie en utilisant le cycle DRX cible, le cycle configurable comprenant un cycle DRX spécifique au dispositif terminal et/ou un cycle de radiomessagerie de RAN.

5. Procédé de surveillance de radiomessagerie réalisé par un dispositif de réseau, et le procédé comprenant :

l'envoi (210) d'une première information à un dispositif terminal, la première information étant utilisée pour indiquer si une cellule de desserte du dispositif terminal prend en charge la réception discontinue étendue, eDRX, de réseau central, CN, et/ou l'eDRX de réseau d'accès radio, RAN,

dans lequel le dispositif terminal est dans un état inactif,

dans lequel l'eDRX de CN et l'eDRX de RAN sont configurées respectivement avec des paramètres de configuration correspondants, et

le procédé étant **caractérisé en ce que**

dans un cas où la première information indique que la cellule de desserte prend en charge l'eDRX de CN mais ne prend pas en charge l'eDRX de RAN,

au sein d'une PTW de l'eDRX de CN, le dispositif de réseau détermine un cycle DRX suivant une troisième manière pour réaliser une radiomessagerie pour le dispositif terminal, et

en dehors de la PTW de l'eDRX de CN, le dispositif de réseau détermine le cycle DRX suivant une quatrième manière pour réaliser une radiomessagerie pour le dispositif terminal,
dans lequel la troisième manière est différente de la quatrième manière.

6. Procédé selon la revendication 5, dans lequel dans un cas où la première information indique que la cellule de desserte prend en charge à la fois l'eDRX de CN et l'eDRX de RAN, au sein d'une fenêtre temporelle de radiomessagerie, PTW, de l'eDRX de CN, le dispositif de réseau détermine un cycle DRX suivant une première manière pour réaliser une recherche par radiomessagerie pour le dispositif terminal ;

dans un intervalle de temps qui se trouve au sein d'une PTW de l'eDRX de RAN et ne chevauche pas la PTW de l'eDRX de CN, le dispositif de réseau détermine le cycle DRX suivant une deuxième manière pour réaliser une recherche par radiomessagerie pour le dispositif terminal ;
dans lequel la première manière est différente de la deuxième manière,
dans lequel
au sein de la PTW de l'eDRX de CN, le dispositif de réseau détermine le minimum d'un cycle DRX par défaut et un cycle configurable en tant que cycle DRX cible, et réalise la recherche par radiomessagerie en utilisant le cycle DRX cible, le cycle configurable comprenant un cycle DRX spécifique au dispositif terminal et/ou un cycle de radiomessagerie de RAN ;
dans l'intervalle de temps qui se trouve au sein de la PTW de l'eDRX de RAN et ne chevauche pas la PTW de l'eDRX de CN, le dispositif de réseau détermine de réaliser une recherche par radiomessagerie en utilisant le cycle DRX par défaut.

7. Procédé selon la revendication 5,
dans lequel,

au sein de la PTW de l'eDRX de CN, le dispositif de réseau détermine le minimum d'un cycle DRX par défaut et un cycle configurable en tant que cycle DRX cible, et réalise la radiomessagerie en utilisant le cycle DRX cible, le cycle configurable comprenant un cycle DRX spécifique au dispositif terminal et/ou un cycle de radiomessagerie de RAN ;
en dehors de la PTW de l'eDRX de CN, le dispositif de réseau réalise une radiomessagerie en utilisant le cycle de radiomessagerie de RAN.

8. Procédé selon la revendication 5, dans lequel dans un cas où la première information indique que la cellule de desserte ne prend en charge ni l'eDRX de CN ni prend en charge l'eDRX de RAN,
le dispositif de réseau détermine le minimum d'un cycle DRX par défaut et un cycle configurable en tant que cycle DRX cible, et réalise la radiomessagerie en utilisant le cycle DRX cible, le cycle configurable comprenant un cycle DRX spécifique au dispositif terminal et/ou un cycle de radiomessagerie de RAN.

9. Procédé selon n'importe laquelle des revendications 5 à 8, dans lequel les paramètres de configuration comprennent un cycle d'eDRX et/ou une longueur de PTW.

10. Procédé selon n'importe laquelle des revendications 5 à 9, dans lequel

le dispositif de réseau est configuré pour recevoir un message de radiomessagerie de RAN envoyé à partir d'un dispositif de réseau d'ancrage du dispositif terminal après que le dispositif de réseau d'ancrage reçoit des données pour le dispositif terminal à partir d'un dispositif de réseau central, dans lequel le message de radiomessagerie de RAN comprend des paramètres de configuration d'eDRX de RAN du dispositif terminal ;
le dispositif de réseau est configuré pour rechercher par radiomessagerie le dispositif terminal sur la base des paramètres de configuration d'eDRX de RAN et d'autres paramètres de configuration ; dans lequel les autres paramètres de configuration comprennent au moins un élément parmi les suivants : des paramètres de configuration d'eDRX de CN reçus à partir du dispositif de réseau central, et des résultats correspondants concernant la prise en charge de l'eDRX de CN et/ou l'eDRX de RAN par une cellule où le dispositif de réseau est localisé.

11. Dispositif terminal (100) comprenant :

une mémoire (104) ;
un émetteur-récepteur (106) ; et
un processeur (101) couplé à la mémoire et à l'émetteur-récepteur ;

dans lequel le processeur est configuré pour exécuter des instructions stockées dans la mémoire pour amener le dispositif terminal à réaliser le procédé selon l'une quelconque des revendications 1 à 4.

12. Dispositif de réseau comprenant :

une mémoire (114) ;
un émetteur-récepteur (116) ; et
un processeur (111) couplé à la mémoire et à l'émetteur-récepteur ;
dans lequel le processeur est configuré pour exécuter des instructions stockées dans la mémoire pour amener le dispositif de réseau à réaliser le procédé selon l'une quelconque des revendications 5 à 10.

FIG.1

**210:** send first information, the first information being used to indicate whether a serving cell of the terminal device supports CN eDRX and/or RAN eDRX

**220:** determine a target occasion according to the first information to perform paging monitoring

FIG.2

a terminal device receives first information from a network device, the first information being used to indicate whether a serving cell of the terminal device supports CN eDRX and/or RAN eDRX  ⟍310

In a case where the first information indicates that the serving cell supports both CN eDRX and RAN eDRX

In a case where the first information indicates that the serving cell supports CN eDRX but does not support RAN eDRX

In a case where the first information indicates that the serving cell neither supports CN eDRX nor supports RAN eDRX

320

in a PTW of the CN eDRX, the terminal device determines a DRX cycle in a first manner to perform paging monitoring (for example, determine the minimum of a default DRX cycle and a configurable cycle as a target DRX cycle, and perform paging monitoring using the target DRX cycle)

340

in a PTW of the CN eDRX, the terminal device determines a DRX cycle in a third manner to perform paging monitoring (for example, determine the minimum of a default DRX cycle and a configurable cycle as a target DRX cycle, and perform paging monitoring using the target DRX cycle)

360

the terminal device determines the minimum of a default DRX cycle and a configurable cycle as a target DRX cycle, and performs paging monitoring using the target DRX cycle, the configurable cycle including a UE specific DRX cycle and/or a RAN paging cycle

330

in a time period that is within the PTW of the RAN eDRX and does not overlap with the PTW of the CN eDRX, the terminal device determines the DRX cycle in a second manner to perform paging monitoring (for example, perform paging monitoring using the default DRX cycle)

350

outside the PTW of CN eDRX, the terminal device determines the DRX cycle in a fourth manner to perform paging monitoring (for example, perform paging monitoring using the RAN paging cycle)

FIG.3

case (a): system information indicates that the cell supports both CN eDRX and RAN eDRX

case (b): system information indicates that the cell supports
CN eDRX and does not support RAN eDRX

case (c): system information indicates that the cell does not support CN eDRX and RAN eDRX

FIG.4

a terminal device receives first information from a network device, the first information being used to indicate whether a serving cell of the terminal device supports CN eDRX and/or RAN eDRX ⟋510

In a case where the first information indicates that the serving cell supports both CN eDRX and RAN eDRX

In a case where the first information indicates that the serving cell supports CN eDRX but does not support RAN eDRX
520

In a case where the first information indicates that the serving cell neither supports CN eDRX nor supports RAN eDRX

in a PTW of eDRX, the terminal device determines a DRX cycle in a fifth manner to perform paging monitoring (for example, determines the minimum of a default DRX cycle and a configurable cycle as a target DRX cycle, and performs paging monitoring using the target DRX cycle)

in a PTW of the CN eDRX, the terminal device determines a DRX cycle in a sixth manner to perform paging monitoring (for example, determines the minimum of a default DRX cycle and a configurable cycle as a target DRX cycle, and perform paging monitoring using the target DRX cycle)
540

the terminal device determines the minimum of a default DRX cycle and a configurable cycle as a target DRX cycle, and performs paging monitoring using the target DRX cycle, the configurable cycle including a UE specific DRX cycle and/or a RAN paging cycle
560

outside the PTW of eDRX, the terminal device does not perform paging monitoring
530

outside the PTW of CN eDRX, the terminal device determines the DRX cycle in a seventh manner to perform paging monitoring (for example, performs paging monitoring using the RAN paging cycle)
550

FIG.5

case (a): system information indicates that the cell supports both CN eDRX and RAN eDRX

|←——eDRX cycle——→|

case (b): system information indicates that the cell supports
CN eDRX and does not support RAN eDRX

|←————————CN eDRX cycle————————→|

case (c): system information indicates that the cell does not support CN eDRX and RAN eDRX

FIG.6

| Anchor network device | | Other network device(s) |
|---|---|---|

710： after receiving data for a terminal device from a core network device, send a RAN paging message to other network device(s) in an RAN paging area of the terminal device, the RAN paging message including RAN eDRX configuration parameters of the terminal device

720： page the terminal device based on the RAN eDRX configuration parameters and other configuration parameters; the other configuration parameters including at least one of CN eDRX configuration parameters received from the core network device, and corresponding results on supporting of CN eDRX and/or RAN eDRX by a cell where the other network device(s) is located.

## FIG.7

800

Receiving module    810

Paging monitoring module    820

## FIG.8

900

Sending module    910

## FIG.9

Terminal Device 100

Processor 101    103    Transmitter

105

Bus

Transceiver 106

104

Receiver 102

Memory

FIG.10

Network Device 110

Processor 111    113    Transmitter

115

Bus

Transceiver 116

114

Receiver 112

Memory

FIG.11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Discussion on e-DRX for Redcap Devices. *3GPP DRAFT, R2-2100344*

- On eDRX for NR RRC Inactive and Idle. *3GPP DRAFT, R2-2009363*